# EUROPÄISCHE PATENTSCHRIFT

(11) **EP 4 013 043 B1**
(45) Veröffentlichungstag und Bekanntmachung des Hinweises auf die Patenterteilung: **28.01.2026**
(21) Anmeldenummer: 21210096.0
(22) Anmeldetag: 24.11.2021
(51) Int. Cl.: H04N 7/15

(54) **VIDEOKONFERENZSYSTEM, VERFAHREN ZUM ÜBERTRAGEN VON INFORMATIONEN UND COMPUTERPROGRAMMPRODUKT**
VIDEO CONFERENCING SYSTEM, INFORMATION TRANSMISSION METHOD AND COMPUTER PROGRAM PRODUCT
SYSTÈME DE VIDÉO CONFÉRENCE, PROCÉDÉ DE TRANSFERT DES INFORMATIONS ET PRODUIT-PROGRAMME INFORMATIQUE

(30) Priorität: 09.12.2020 DE 102020132775
(43) Veröffentlichungstag der Anmeldung: 15.06.2022
(73) Patentinhaber: Alfaview Video Conferencing Systems GmbH & Co. KG, 76133 Karlsruhe (DE)
(72) Erfinder: Fostiropoulos, Nikolaos, 76139 Karlsruhe (DE)
(74) Vertreter: LBP Lemcke, Brommer & Partner Patentanwälte mbB

(56) Entgegenhaltungen:
- CN-A- 108 650 484
- US-A1- 2006 120 307
- US-A1- 2014 132 701
- US-A1- 2016 170 970

## Beschreibung

Die Erfindung betrifft ein Videokonferenzsystem, welches ausgebildet ist zum bidirektionalen Übertragen von Video- und Audiosignalen mittels Streaming-Technologie zwischen wenigstens drei Endpunkten, die jeweils eine Sendeeinrichtung und/oder eine Empfangseinrichtung für Audioströme und/oder für Videoströme aufweisen, gemäß Anspruch 1.

Die Erfindung betrifft weiterhin ein Verfahren zum Übertragen von Informationen mittels Streaming-Technologie über Kommunikationskanäle zwischen wenigstens drei Endpunkten, die jeweils eine Sendeeinrichtung und/oder eine Empfangseinrichtung für Audioströme und/oder für Videoströme aufweisen, gemäß Anspruch 9.

Außerdem betrifft die Erfindung ein Computerprogrammprodukt mit auf einem physikalischen Datenträger gespeicherten oder speicherbaren Programminstruktionen gemäß Anspruch 15.

Videokonferenzsysteme der genannten Art und zugehörige Übertragungsverfahren sind bekannt; sie genießen insbesondere aufgrund der Einschränkungen des Alltags- und Berufslebens im Zuge der Corona-Epidemie zunehmende Beliebtheit.

Vorbekannte Videokonferenzsysteme sind in US 2014/132701 A1, CN 108 650 484 A, US 2016/170970 A1 und US 2006/120307 A1 offenbart.

Insbesondere, wenn derartige Videokonferenzsysteme im Bildungsbereich eingesetzt werden, kommt es regelmäßig vor, dass einzelne Teilnehmer an einer Videokonferenz einem Ausbilder, Sprecher oder Präsentator nicht ohne Weiteres folgen können, weil sie dessen Sprache nicht oder nicht ausreichend verstehen. Es besteht folglich Bedarf an einem Videokonferenzsystem bzw. an einem Verfahren zum Übertragen von Informationen, welches es in einfacher Weise ermöglicht, (Simultan-)Übersetzungen eines übertragenen Audiostroms in einfacher und flexibler Weise bereitzustellen, um somit einer vergrößerten Nutzeranzahl die Teilnahme an Videokonferenzen zu ermöglichen.

Diese Aufgabe wird erfindungsgemäß gelöst durch ein Videokonferenzsystem mit den Merkmalen des Anspruchs 1, durch ein Verfahren zum Übertragen von Informationen mit den Merkmalen des Anspruchs 9 sowie durch ein Computerprogrammprodukt mit den Merkmalen des Anspruchs 15.

Vorteilhafte Weiterbildungen der Erfindungsgegenstände sind in den jeweiligen Unteransprüchen definiert und werden hiermit explizit per Referenz in die Beschreibung aufgenommen.

Ein erfindungsgemäßes Videokonferenzsystem ist ausgebildet zum bidirektionalen Übertragen von Video- und Audiosignalen mittels Streaming-Technologie zwischen wenigstens drei Endpunkten, die jeweils eine Sendeeinrichtung und/oder eine Empfangseinrichtung für Audioströme und/oder für Videoströme aufweisen. Das erfindungsgemäße Videokonferenzsystem umfasst:
i) wenigstens einen ersten Endpunkt mit zumindest einer Sendeeinrichtung für Audioströme und vorzugsweise auch mit einer Sendeeinrichtung für Videoströme;
ii) wenigstens einen zweiten Endpunkt mit zumindest einer Empfangseinrichtung für Audioströme;
iii) wenigstens einen dritten Endpunkt mit zumindest einer Sendeeinrichtung für Audioströme und einer Empfangseinrichtung für Audioströme; bei dem

a) der erste Endpunkt mit dem zweiten Endpunkt und dem dritten Endpunkt verbunden ist, um einen ersten Audiostrom mittels der Sendeeinrichtung für Audioströme zu dem zweiten Endpunkt und zu dem dritten Endpunkt zu übertragen und um vorzugsweise parallel zu dem ersten Audiostrom auch einen ersten Videostrom mittels der Sendeeinrichtung für Videoströme zumindest zu dem zweiten Endpunkt zu übertragen;
b) der zweite Endpunkt über eine Anforderungseinrichtung, vorzugsweise eine grafische Benutzerschnittstelle, verfügt und mit dem dritten Endpunkt verbunden ist, um selektiv einen zweiten Audiostrom mittels eines durch die Anforderungseinrichtung erzeugten oder erzeugbaren Anforderungssignals bei dem dritten Endpunkt anzufordern und mittels der Empfangseinrichtung von dem dritten Endpunkt zu empfangen, welcher zweite Audiostrom von dem ersten Audiostrom abgeleitet ist;
c) der dritte Endpunkt dazu ausgebildet ist, den ersten Audiostrom von dem ersten Endpunkt und das Anforderungssignal von dem zweiten Endpunkt zu empfangen und in Abhängigkeit von dem Anforderungssignal den zweiten Audiostrom zu erzeugen und zu dem zweiten Endpunkt zu übertragen.

Der dritte Endpunkt ist dazu eingerichtet, den Empfang eines weiteren Anforderungssignals bei einem weiteren dritten Endpunkt zu erkennen und in Abhängigkeit von dem weiteren Anforderungssignal einen weiteren zweiten Audiostrom zu erzeugen und zu demjenigen zweiten Endpunkt zu übertragen, von welchem zweiten Endpunkt das weitere Anforderungssignal stammte, wobei vorzugsweise ein gegebener dritter Endpunkt zum Erzeugen nur eines zweiten Audiostroms zu einer gegebenen Zeit ausgebildet ist und wobei höchst vorzugsweise der weitere zweite Audiostrom nur erzeugbar ist, wenn gerade kein zweiter Audiostrom erzeugt wird. Der zweite Audiostrom und/oder der weitere zweite Audiostrom ist eine Simultan-Übersetzung des ersten Audiostroms, vorzugsweise eine Humanübersetzung.

Ein erfindungsgemäßes Verfahren zum Übertragen von Informationen mittels Streaming-Technologie über Kommunikationskanäle zwischen wenigstens drei Endpunkten, die jeweils eine Sendeeinrichtung und/oder eine Empfangseinrichtung für Audioströme und/oder für Videoströme aufweisen, zeichnet sich dadurch aus, dass:
a) ein erster Endpunkt zumindest zeitweise mit einem zweiten Endpunkt und mit einem dritten Endpunkt über einen entsprechenden Kommunikationskanal verbunden wird und einen ersten Audiostrom mittels der Sendeeinrichtung für Audioströme zu dem zweiten Endpunkt und dem dritten Endpunkt überträgt, während der erste Endpunkt vorzugsweise parallel zu dem ersten Audiostrom auch einen ersten Videostrom mittels der Sendeeinrichtung für Videoströme zumindest zu dem zweiten Endpunkt überträgt;
b) der zweite Endpunkt zumindest zeitweise mit dem dritten Endpunkt über einen entsprechenden Kommunikationskanal verbunden wird, um selektiv einen zweiten Audiostrom mittels eines Anforderungssignals bei dem dritten Endpunkt anzufordern und von dem dritten Endpunkt zu empfangen, welcher zweite Audiostrom von dem ersten Audiostrom abgeleitet wird;
c) der dritte Endpunkt den ersten Audiostrom von dem ersten Endpunkt und das Anforderungssignal von dem zweiten Endpunkt empfängt und in Abhängigkeit von dem Anforderungssignal den zweiten Audiostrom aus dem ersten Audiostrom erzeugt und zu dem zweiten Endpunkt überträgt;
d) der zweite Endpunkt zumindest den zweiten Audiostrom ausgibt.

Der dritte Endpunkt erkennt den Empfang eines weiteren Anforderungssignals bei einem weiteren dritten Endpunkt und erzeugt in Abhängigkeit von dem weiteren Anforderungssignal einen weiteren zweiten Audiostrom und überträgt ihn zu demjenigen zweiten Endpunkt, von welchem zweiten Endpunkt das weitere Anforderungssignal stammte, wobei vorzugsweise ein gegebener dritter Endpunkt nur einen zweiten Audiostrom zu einer gegebenen Zeit erzeugt und wobei höchst vorzugsweise der weitere zweite Audiostrom nur erzeugt wird, wenn gerade kein zweiter Audiostrom erzeugt wird. Der zweite Audiostrom und/oder der weitere zweite Audiostrom wird durch eine Simultan-Übersetzung des ersten Audiostroms erzeugt, vorzugsweise durch eine Humanübersetzung, wobei höchst vorzugsweise einem Benutzer des zweiten Endpunkts ein Videostrom eines Humanübersetzers zusammen mit einem Audiostrom der Humanübersetzung ausgegeben wird.

Ein erfindungsgemäßes Computerprogrammprodukt umfasst auf einem physikalischen Datenträger gespeicherte oder speicherbare Programminformationen, bei deren Ausführung auf einem Computersystem mit wenigstens drei über Kommunikationskanäle verbundenen oder verbindbaren Endpunkten, die jeweils eine Sendeeinrichtung und/oder eine Empfangseinrichtung für Audioströme und/oder für Videoströme aufweisen,
a) ein erfindungsgemäßes Videokonferenzsystem zum bidirektionalen Übertragen von Video- und Audiosignalen ausgebildet und/oder
b) ein erfindungsgemäßes Verfahren zum Übertragen von Informationen zwischen den wenigstens drei Endpunkten ausgeführt wird.

Das erfindungsgemäße Computerprogrammprodukt muss nicht zwangsläufig in auf einem physikalischen Datenträger gespeicherter Form vorliegen; es kann auch als Download oder in sonstiger Weise in körperloser Form bereitgestellt werden. Wesentlich ist, dass bei Ausführung der zugehörigen Programminformationen ein erfindungsgemäßes Videokonferenzsystem erzeugt bzw. ein erfindungsgemäßes Verfahren durchgeführt wird.

Wenn im Rahmen der Beschreibung von "Endpunkten" die Rede ist, handelt es sich hierbei in der Regel um Computer, insbesondere und ohne Beschränkung herkömmliche Desktop-PCs, die als Endpunkte von Übertragungskanälen in dem Videokonferenzsystem fungieren, was dem Fachmann an sich geläufig ist. Derartige Endpunkte verfügen regelmäßig über Sendeeinrichtungen und Empfangseinrichtungen, um Audio- und Videoströme von anderen Teilnehmern des Videokonferenzsystems empfangen und ihrerseits Audio- und Videoströme an andere Teilnehmer des Videokonferenzsystems senden zu können. Auch dies ist dem Fachmann an sich geläufig. Die genannten Endpunkte müssen nicht an einem gemeinsamen Ort lokalisiert sein, sondern können (kabelgebunden und/oder drahtlos) über ein Computernetz, beispielsweise das weltweite Internet oder ein firmeninternes Intranet, miteinander verbunden sein. Sie können sich hierbei auch an physikalisch weit voneinander entfernten Orten befinden.

Zum Erzeugen der genannten Audio- und Videoströme umfassen die Endpunkte eines Videokonferenzsystems regelmäßig entsprechende Aufnahmegeräte, wie Kameras oder Mikrofone, was dem Fachmann ebenfalls geläufig ist. Eine entsprechende Ausgabe der Audio- und Videoströme geschieht mittels hierfür geeigneter Geräte, wie Lautsprecher, Kopfhörer oder Bildschirme (Displays). Auch das ist dem Fachmann an sich bekannt.

In der Regel verfügt jeder Teilnehmer an dem Videokonferenzsystem über einen eigenen Endpunkt, beispielsweise also über einen eigenen Computer. Dieser ist dazu ausgebildet, die genannten Audio- und Videoströme von anderen Teilnehmern des Videokonferenzsystems zu empfangen und auszugeben. Darüber hinaus verfügt jeder Teilnehmer an dem Videokonferenzsystem grundsätzlich über die Möglichkeit, eigene Audio- und Videoströme in dem Videokonferenzsystem bereitzustellen, die dann von anderen Teilnehmern ausgegeben werden können.

Erfindungsgemäß umfasst das Videokonferenzsystem zunächst wenigstens einen ersten Endpunkt, der zumindest zum Senden von Audioströmen ausgebildet ist. Bei diesem ersten Endpunkt kann es sich um den Endpunkt eines Ausbilders oder Präsentators handeln, der einen entsprechenden Präsentations-Audiostrom (erster Audiostrom) in dem Videokonferenzsystem zur Verfügung stellt. Vorzugsweise existiert parallel dazu ein entsprechender (erster) Videostrom, der ebenfalls in dem Videokonferenzsystem bereitgestellt wird.

Der zweite Endpunkt gehört regelmäßig einem "normalen" Teilnehmer an dem Videokonferenzsystem, beispielsweise einem Schüler, der zumindest den ersten Audiostrom konsumieren möchte. Entsprechend ist der zweite Endpunkt zumindest mit einer Empfangseinrichtung für Audioströme ausgestattet, um den ersten Audiostrom empfangen und (über geeignete Ausgabeeinrichtungen) entsprechend auch wiedergeben zu können.

Der dritte Endpunkt wird im Rahmen einer bevorzugten Verwendung des erfindungsgemäßen Videokonferenzsystems einem Übersetzer (Dolmetscher) zugeordnet, der in der Lage sein soll, einen Audiostrom in einer ersten Sprache zu empfangen, daraus einen Audiostrom in einer anderen Sprache zu generieren und in dem Videokonferenzsystem bereitzustellen. Entsprechend verfügt der dritte Endpunkt neben einer Empfangseinrichtung für Audioströme auch über eine Sendeeinrichtung für Audioströme.

Weiterhin erfindungsgemäß ist nun der erste Endpunkt mit dem zweiten Endpunkt und dem dritten Endpunkt verbunden. Der erste Endpunkt erzeugt den ersten Audiostrom und stellt diesen mittels der Sendeeinrichtung dem zweiten Endpunkt und dem dritten Endpunkt zur Verfügung. Parallel dazu kann auch ein erster Videostrom übertragen werden.

Der zweite Endpunkt, also der "normale" Teilnehmer, verfügt über eine Anforderungseinrichtung, die als grafische Benutzerschnittstelle ausgebildet sein kann, mit deren Hilfe er ein sog. Anforderungssignal erzeugen und an den dritten Endpunkt übermitteln kann, um auf diese Weise selektiv einen zweiten Audiostrom bei dem dritten Endpunkt anzufordern. Bei diesem zweiten Audiostrom handelt es sich vorzugsweise um eine (Simultan-)Übersetzung des ersten Audiostroms, welche der Benutzer des zweiten Endpunkts dann von dem dritten Endpunkt empfängt. Im Rahmen der vorliegenden Erfindung reicht es jedoch aus, wenn der zweite Audiostrom von dem ersten Audiostrom abgeleitet ist - es muss sich also nicht zwangsläufig um eine (Simultan-)Übersetzung des ersten Audiostroms handeln, obwohl dies eine besonders bevorzugte Anwendung der vorliegenden Erfindung darstellt.

Grundsätzlich ist die Erfindung auch auf Videokonferenzsysteme erweiterbar, bei denen zusätzlich oder alternativ zu dem genannten ersten Audiostrom ein von dem ersten Endpunkt stammender erster Videostrom auf entsprechende Anforderung in einen zweiten Videostrom umgesetzt oder übersetzt wird. Des Weiteren besteht grundsätzlich die Möglichkeit, auch den ersten Audiostrom nicht in einen weiteren Audiostrom, sondern in einen Videostrom umzusetzen, um beispielsweise einem hörgeschädigten Teilnehmer eine entsprechende Übersetzung in die Gebärdensprache anzuzeigen. Dies ist auch unabhängig von der vorstehend beschriebenen Dolmetscher- bzw. Übersetzungsfunktion möglich.

Eine bevorzugte Anwendung der Erfindung sieht - wie bereits angesprochen - allerdings vor, dass es sich bei dem zweiten Audiostrom um eine (Simultan-) Übersetzung des ersten Audiostroms handelt, welches zu dem zweiten Endpunkt bzw. zu dessen Benutzer auf Anforderung hin übertragen wird.

Der dritte Endpunkt ist entsprechend erfindungsgemäß dazu ausgebildet, den ersten Audiostrom (und/oder den ersten Videostrom) von dem ersten Endpunkt und das Anforderungssignal von dem zweiten Endpunkt zu empfangen und in Abhängigkeit von dem Anforderungssignal den zweiten Audiostrom bzw. den zweiten Videostrom zu erzeugen und zu dem zweiten Endpunkt zu übertragen. Es ist in diesem Zusammenhang möglich aber nicht zwingend erforderlich, dass der zweite Audiostrom bzw. der zweite Videostrom erst nach Aussendung bzw. Empfang des Anforderungssignals generiert wird; er kann bereits zuvor erzeugt werden, wird aber erst nach Aussendung bzw. Empfang des Anforderungssignals bei dem zweiten Endpunkt bereitgestellt bzw. ausgegeben.

Die weiter oben wiedergegebene Aufzählung i) bis iii) von Ausstattungsmerkmalen der einzelnen Endpunkte gibt nur diejenigen Ausstattungsmerkmale an, die im Rahmen eines erfindungsgemäßen Videokonferenzsystems bzw. zur Durchführung des erfindungsgemäßen Verfahrens zwingend erforderlich sind. In der Regel wird jeder der Endpunkte über identische Ausstattungsmerkmale verfügen, nämlich jeweils über Sende- und Empfangseinrichtungen für Audioströme sowie über Sende- und Empfangseinrichtungen für Videoströme, wie dies von herkömmlichen Videokonferenzsystemen bekannt ist, bei denen sich alle Teilnehmer gegenseitig sehen und miteinander sprechen können.

Eine erste Weiterbildung des erfindungsgemäßen Videokonferenzsystems sieht nun vor, dass der zweite Endpunkt dazu ausgebildet ist, mittels der Empfangseinrichtung den ersten Audiostrom und den zweiten Audiostrom zeitgleich zu empfangen und mittels einer Wiedergabeeinrichtung zeitgleich auszugeben. Auf diese Weise ist der zweite Endpunkt bzw. der dortige Teilnehmer in der Lage, parallel zu dem Original-Audiostrom (erster Audiostrom) auch den zweiten Audiostrom (Übersetzung) wiederzugeben, wodurch sich das Hörerlebnis optimieren lässt, weil es auf diese Weise insbesondere möglich ist, neben dem eigentlichen Sinn des Gehörten auch Nuancen des Originals zu erfassen.

Eine andere Weiterbildung des erfindungsgemäßen Videokonferenzsystems sieht vor, dass der zweite Endpunkt dazu ausgebildet ist, den ersten Audiostrom und den zweiten Audiostrom mit unterschiedlichen Lautstärken auszugeben, vorzugsweise den ersten Audiostrom mit einer gegenüber dem zweiten Audiostrom verminderten Lautstärke, wobei der erste Audiostrom auch vollständig ausgeblendet werden kann. Auf diese Weise besteht für den Teilnehmer am zweiten Endpunkt die Möglichkeit, sich überwiegend oder vollständig auf den zweiten Audiostrom zu konzentrieren, um beispielsweise einer Präsentation optimal folgen zu können, selbst wenn er/sie die Originalsprache nicht versteht. Diese Lautstärkeneinstellung erfolgt vorzugsweise automatisch mit Empfang des zweiten Audiostroms; er kann jedoch zusätzlich oder alternativ auch eine Einstellmöglichkeit für den Benutzer vorhanden sein. Wenn mehrere erste Audioströme (mehrere Sprecher) vorhanden sind, kann vorgesehen sein, dass alle ersten Audioströme mit einer gegenüber dem zweiten Audiostrom verminderten Lautstärke ausgegeben werden, solange der zweite Audiostrom ausgegeben wird.

Im Zuge einer wieder anderen Weiterbildung kann das erfindungsgemäße Videokonferenzsystem bezogen auf den dritten Endpunkt auch dazu ausgebildet sein, den zweiten Audiostrom nur zu einem zweiten Endpunkt zu übertragen, von dem zuvor das Anforderungssignal empfangen wurde. Mit anderen Worten: Nur solche Teilnehmer, die den zweiten Audiostrom aktiv anfordern, bekommen diesen auch übertragen; alle anderen Teilnehmer folgen dagegen dem ersten Audiostrom - insbesondere, wenn sie die Sprache des ersten Audiostroms hinreichend gut verstehen. Auf diese Weise wird das Videokonferenzsystem nicht mit unnötigen Übertragungen belastet, was sich negativ auf die verfügbare Bandbreite und die Übertragungsqualität auswirken kann.

Eine wieder andere Weiterbildung des erfindungsgemäßen Videokonferenzsystems sieht vor, dass der zweite Endpunkt dazu ausgebildet ist, mittels der Anforderungseinrichtung selektiv den zweiten Audiostrom mittels eines durch die Anforderungseinrichtung erzeugten oder erzeugbaren Beendigungssignals bei dem dritten Endpunkt abzubestellen. Entsprechend ist der dritte Endpunkt dazu ausgebildet, den zweiten Audiostrom nur zu einem zweiten Endpunkt zu übertragen, von dem zuvor kein Beendigungssignal empfangen wurde. Auf diese Weise ist es einem Teilnehmer jederzeit möglich, einen zuvor angeforderten zweiten Audiostrom wieder abzubestellen, wenn sich insbesondere herausstellt, dass eine Übersetzung nicht benötigt wird. Auf diese Weise lassen sich in Beschlag genommene Bandbreiten wieder freigeben, um bei Bedarf die Übertragungsqualität in dem Videokonferenzsystem zu verbessern.

Wieder eine andere Weiterbildung des erfindungsgemäßen Videokonferenzsystems sieht vor, dass eine Mehrzahl an dritten Endpunkten vorhanden ist, die jeweils unterschiedliche zweite Audioströme bereitstellen. Bezogen auf das eingangs erwähnte Anwendungsbeispiel kann es sich also um eine Mehrzahl von dritten Endpunkten handeln, an denen jeweils ein anderer Übersetzer als Benutzer zugegen ist, um Übersetzungen in verschiedene Sprachen bereitstellen zu können, was den bereits erwähnten unterschiedlichen zweiten Audioströmen entspricht. Zudem kann es möglich sein, dass Dolmetscher die Übersetzung eines anderen Dolmetschers übersetzen (Relaisdolmetschen). Dabei ist weiterhin vorgesehen, dass durch den zweiten Endpunkt ein bestimmter zweiter Audiostrom durch Aussenden des Anforderungssignals an einen bestimmten dritten Endpunkt selektiv anforderbar ist. Wenn also beispielsweise ein erster dritter Endpunkt eine englische Übersetzung bereitstellt, während ein zweiter dritter Endpunkt eine französische Übersetzung bereitstellt, kann der zweite Endpunkt bzw. der dortige Teilnehmer gezielt denjenigen zweiten Audiostrom bei dem betreffenden dritten Endpunkt anfordern, der seinen sprachlichen Vorlieben entspricht.

Noch eine andere Weiterbildung des erfindungsgemäßen Videokonferenzsystems sieht vor, dass zumindest der zweite Endpunkt zusätzlich über eine Empfangseinrichtung für Videoströme verfügt und zumindest der dritte Endpunkt zusätzlich über eine Sendeeinrichtung für Videoströme verfügt, welche Sendeeinrichtung eingerichtet ist, bei Empfang des Anforderungssignals von dem zweiten Endpunkt parallel zu dem zweiten Audiostrom, vorzugsweise also einer Übersetzung, noch einen zugehörigen zweiten Videostrom zu dem zweiten Endpunkt zu übertragen. Auf diese Weise ist es dem Teilnehmer an dem zweiten Endpunkt möglich, den Teilnehmer an dem dritten Endpunkt, insbesondere also einen Übersetzer oder eine Übersetzerin, zu sehen, während er/sie von dort den zweiten Audiostrom (die Übersetzung) empfängt. Vorzugsweise geschieht dies parallel zu einem Empfang des ersten Videostroms, der einen Präsentator zeigen kann, von dem der erste Audiostrom stammt. Vorzugsweise endet die Übertragung des zweiten Videostroms zusammen mit einer Beendigung der Übertragung des zweiten Audiostroms. Wenn die angeforderte Übersetzung eine Übersetzung in die Gebärdensprache ist, erfolgt unter Umständen nur eine Übertragung des zweiten Videostroms (ohne zweiten Audiostrom).

In Weiterbildung des erfindungsgemäßen Videokonferenzsystems kann auch vorgesehen sein, dass der zweite Endpunkt eingerichtet ist, vor Absenden des Anforderungssignals über die Empfangseinrichtung für Videoströme bzw. eine entsprechende Ausgabeeinrichtung ein (Stand-)Bild, vorzugsweise ein Symbolbild, anzuzeigen, welches Bild eine Eigenschaft des dritten Endpunkts und/oder des zweiten Audiostroms anzeigt. Wenn also beispielsweise der dritte Endpunkt dazu eingerichtet ist, eine Übersetzung des ersten Audiostroms in die französische Sprache bereitzustellen, könnte das genannte Bild eine französische Flagge oder den Eiffelturm darstellen, damit ein Benutzer an dem zweiten Endpunkt ohne Weiteres erkennen kann, welche Art von zweitem Audiostrom er durch seine Anforderung erhalten wird.

Vorzugsweise schaltet der dritte Endpunkt (der Dolmetscher) sich selbst frei bzw. ist mit einer entsprechenden Freischalt-Einrichtung, d.h. einem entsprechenden Bedienelement versehen. Sobald er einsatzbereit für die Verdolmetschung ist, aktiviert er sich selbst für die weiteren Teilnehmer (zweite Endpunkte) über die Freischalt-Einrichtung und wird dann als Sprachkanal sichtbar (insbesondere in Form des oben erwähnten (Stand-)Bildes).

Dies kann beispielsweise bei einem zweiten Endpunkt (Teilnehmerpult) in einer Display-Sidebar angezeigt werden. Der betreffende Teilnehmer kann sich dann in verschiedene Sprachkanäle schalten bzw. entsprechende Audioströme auswählen; diese werden bevorzugt angezeigt anhand typischer Symbole/Flaggen der jeweiligen Nation (z. B. Französisch - Eiffelturm), wie oben bereits erwähnt.

Im Zuge einer wieder anderen Weiterbildung kann das erfindungsgemäße Videokonferenzsystem vorsehen, dass eine Anzahl zeitgleich bei dem zweiten Endpunkt zu empfangender zweiter Audioströme begrenzt ist, vorzugsweise auf Eins (1). Auf diese Weise lässt sich die unnötige Belegung von Bandbreiten vermeiden, weil ein Benutzer des zweiten Endpunkts regelmäßig nicht in der Lage sein wird, mehr als einem zweiten Audiostrom gleichzeitig zu folgen. Die Erfindung ist jedoch in diesem Zusammenhang keinesfalls zwingend auf die Zahl Eins beschränkt.

Weiterhin kann bei einer besonderen Ausgestaltung des erfindungsgemäßen Videokonferenzsystems vorgesehen sein, dass der dritte Endpunkt über eine Anzeigeeinrichtung verfügt, die eine Anzahl von zweiten Endpunkten anzeigt, von denen das Anforderungssignal empfangen wurde und die zu einem gegebenen Zeitpunkt den zweiten Audiostrom empfangen. Im Zuge des eingangs geschilderten Anwendungsfalls kann also beispielsweise der Übersetzer bzw. die Übersetzerin an dem dritten Endpunkt erkennen, wie viele Teilnehmer (an zweiten Endpunkten) aktuell den zweiten Audiostrom (z. B. die angeforderte Übersetzung) empfangen. Sobald die Anzahl Null (0) wird, besteht grundsätzlich die Möglichkeit, dass der Übersetzer bzw. die Übersetzerin an dem dritten Endpunkt ihre Übersetzungstätigkeit einstellt, um entsprechende Ressourcen zu schonen. In diesem Zusammenhang besteht dann auch die Möglichkeit, dass ein Übersetzer bzw. eine Übersetzerin, die in mehrere Sprachen übersetzen kann, ihre Kapazitäten auf einem anderen Sprachkanal, d. h. zur Erzeugung eines anderen benötigten zweiten Audiostroms, bereitstellt.

Die genannte Anzeigeeinrichtung muss nicht auf den dritten Endpunkt beschränkt sein, sondern kann bei allen Endpunkten verfügbar sein.

Das erfindungsgemäße Videokonferenzsystems sieht vor, dass ein dritter Endpunkt eingerichtet ist, den Empfang eines weiteren Anforderungssignals bei einem weiteren dritten Endpunkt zu erkennen und in Abhängigkeit von dem weiteren Anforderungssignal einen weiteren zweiten Audiostrom zu erzeugen und zu demjenigen zweiten Endpunkt zu übertragen, von welchem zweiten Endpunkt das weitere Anforderungssignal stammte. Dies knüpft an den weiter oben bereits geschilderten Sachverhalt an, wonach bei einem beschriebenen Videokonferenzsystem ein weiterer zweiter Audiostrom, d. h. beispielsweise eine weitere Übersetzung in eine andere Sprache, benötigt wird. Wenn der dritte Endpunkt (der Übersetzer oder die Übersetzerin) in der Lage ist, den Empfang eines solchen weiteren Anforderungssignals oder alternativ die Aussendung eines solchen zu erkennen, besteht grundsätzlich die Möglichkeit, dass er/sie einen entsprechenden weiteren zweiten Audiostrom (eine zusätzliche Übersetzung) bereitstellt.

In Weiterbildung dieser Idee kann vorgesehen sein, dass der genannte weitere zweite Audiostrom (die zusätzliche Übersetzung) nur erzeugbar ist, wenn gerade kein zweiter Audiostrom (die erste Übersetzung) erzeugt wird. Mit anderen Worten: Ein dritter Endpunkt (Übersetzer/in), der bereits einen zweiten Audiostrom (eine Übersetzung) erzeugt, kann diesen nicht einfach beenden, um wahlweise einen weiteren zweiten Audiostrom (eine andere Übersetzung) zu erzeugen. Grundsätzlich besteht aber an sich die Möglichkeit, einen gerade erzeugten zweiten Audiostrom abzubrechen, wenn ein erhöhter Bedarf an einem weiteren zweiten Audiostrom besteht und gerade nicht genügend Ressourcen verfügbar sind, um beide zweite Audioströme zu erzeugen.

Schließlich sieht das erfindungsgemäße Videokonferenzsystems noch vor, dass der zweite Audiostrom und/oder der weitere zweite Audiostrom eine Simultan-Übersetzung des ersten Audiostroms ist, vorzugsweise eine Humanübersetzung. Hierauf wurde weiter oben schon wiederholt hingewiesen, wenn von dem bevorzugten Anwendungsfall des erfindungsgemäßen Videokonferenzsystems die Rede war. Die Erfindung ist aber nicht auf Simultan-Übersetzungen und/oder Humanübersetzungen beschränkt, sondern schließt speziell auch Maschinenübersetzungen mit ein.

Bezogen auf das erfindungsgemäße Verfahren sieht eine erste Weiterbildung desselben vor, dass der zweite Endpunkt den ersten Audiostrom und den zweiten Audiostrom zeitgleich empfängt und zeitgleich ausgibt. Hierauf wurde weiter oben mit Blick auf das Videokonferenzsystem und dessen mögliche Ausgestaltungen bereits hingewiesen.

Außerdem kann in Weiterbildung des erfindungsgemäßen Verfahrens vorgesehen sein, dass der zweite Endpunkt den ersten Audiostrom und den zweiten Audiostrom (automatisch) mit unterschiedlichen Lautstärken ausgibt, vorzugsweise den ersten Audiostrom mit gegenüber dem zweiten Audiostrom verminderter Lautstärke. Auch hierauf wurde weiter oben anhand des Videokonferenzsystems bereits hingewiesen.

Noch eine andere Weiterbildung des erfindungsgemäßen Verfahrens sieht vor, dass der dritte Endpunkt den zweiten Audiostrom nur zu einem zweiten Endpunkt überträgt, von dem das Anforderungssignal empfangen wurde. Auch dieser Aspekt wurde weiter oben mit Blick auf das Videokonferenzsystem bereits erörtert.

Zusätzlich kann in Weiterbildung des erfindungsgemäßen Verfahrens vorgesehen sein, dass der zweite Endpunkt selektiv den zweiten Audiostrom mittels eines Beendigungssignals bei dem dritten Endpunkt abbestellt, während der dritte Endpunkt den zweiten Audiostrom nur zu einem zweiten Endpunkt überträgt, von dem zuvor kein Beendigungssignal empfangen wurde. Auch dieser Aspekt wurde weiter oben bereits eingehend erörtert.

Wieder eine andere Weiterbildung des erfindungsgemäßen Verfahrens sieht vor, dass eine Mehrzahl an dritten Endpunkten jeweils unterschiedliche zweite Audioströme bereitstellen, wobei der zweite Endpunkt einen bestimmten zweiten Audiostrom durch Aussenden des Anforderungssignals an einen bestimmten dritten Endpunkt selektiv anfordert. Auf diese Weise kann ein Teilnehmer oder Benutzer an dem zweiten Endpunkt selektiv bestimmte zweite Audioströme bei den jeweils zugehörigen dritten Endpunkten anfordern, wobei es sich vorzugsweise um unterschiedliche Übersetzungssprachen handelt. Auch dies wurde weiter oben bereits ausführlich diskutiert. Natürlich kann ein gegebener dritter Endpunkt auch mehr als einen zweiten Audiostrom anbieten, unter denen der Teilnehmer auswählt. In der Regel besteht diese Auswahlmöglichkeit aber nicht mehr, sobald ein bestimmter zweiter Audiostrom von (irgend)einem Teilnehmer ausgewählt wurde, weil ein Humanübersetzer nicht mehr als einen zweiten Audiostrom gleichzeitig erzeugen kann.

Noch eine Weiterbildung des erfindungsgemäßen Verfahrens sieht vor, dass der dritte Endpunkt bei Empfang des Anforderungssignals von dem zweiten Endpunkt parallel zu dem zweiten Audiostrom auch einen zweiten Videostrom zu dem zweiten Endpunkt überträgt. Auf diese Weise besteht insbesondere die Möglichkeit, dass ein Teilnehmer an dem zweiten Endpunkt die Quelle des zweiten Audiostroms (eine Übersetzung) auch sehen kann, was die Akzeptanz erhöhen und das Verständnis fördern kann. Es wurde auch bereits darauf hingewiesen, dass der zweite Videostrom parallel zu dem ersten Videostrom, der regelmäßig vom Ausbilder oder Präsentator stammt, übertragen werden kann. Mit Beendigung (Abbestellung) des zweiten Audiostroms endet in der Regel auch die Übertragung bzw. der Empfang des zweiten Videostroms.

Vorzugsweise erscheint der zweite Videostrom des dritten Endpunktes bzw. alternativ ein Bild des Teilnehmers an dem dritten Endpunkt (des Dolmetschers) erst, wenn dieser anfängt zu übersetzen, d. h. zu sprechen. Erst bei seiner eigentlichen Arbeit, d. h. bei der Übersetzung, ist der betreffende Teilnehmer im virtuellen Raum wahrnehmbar.

Insbesondere bevorzugt ist der dritte Endpunkt, bevor er durch ein Anforderungssignal von einem Teilnehmer aktiviert wird, lediglich im Teilnehmerpult als Sprachkanal sichtbar.

Um einem Teilnehmer bzw. Benutzer an dem zweiten Endpunkt die Auswahl eines dritten Endpunkts zu erleichtern, kann im Zuge einer wieder anderen Weiterbildung des erfindungsgemäßen Verfahrens auch noch vorgesehen sein, dass der zweite Endpunkt vor Absenden des Anforderungssignals ein (Stand-)Bild, vorzugsweise Symbolbild, für den dritten Endpunkt anzeigt, welches Bild eine Eigenschaft des dritten Endpunkts und/oder des zweiten Audiostroms angibt. Es wurde bereits darauf hingewiesen, dass dieses Bild beispielsweise eine Landesflagge darstellen kann, welche eine Sprache des zweiten Audiostroms symbolisiert.

Außerdem kann in Weiterbildung des erfindungsgemäßen Verfahrens noch vorgesehen sein, dass eine Anzahl zeitgleich bei dem zweiten Endpunkt empfangener zweiter Audioströme begrenzt ist, vorzugsweise auf Eins (1). Hierdurch lassen sich Systemressourcen einsparen bzw. sinnvoll nutzen, worauf bereits hingewiesen wurde.

Noch eine Weiterbildung des erfindungsgemäßen Verfahrens sieht vor, dass der dritte Endpunkt seinem Benutzer (Übersetzer/in) eine Anzahl von zweiten Endpunkten anzeigt, von denen das Anforderungssignal empfangen wurde, die zu einem gegebenen Zeitpunkt den zweiten Audiostrom empfangen. Wenn also beispielsweise ein Übersetzer oder eine Übersetzerin an dem dritten Endpunkt den zweiten Audiostrom erzeugt, kann er/sie zu jeder Zeit sehen, wie viele Teilnehmer an zweiten Endpunkten derzeit den zweiten Audiostrom nutzen. Es besteht auf diese Weise die Möglichkeit zu reagieren, wenn beispielsweise die genannte Anzahl auf Null (0) fällt.

Im Rahmen des erfindungsgemäßen Verfahrens ist vorgesehen, dass der dritte Endpunkt den Empfang des weiteren Anforderungssignals bei einem weiteren dritten Endpunkt erkennt bzw. dem dortigen Benutzer anzeigt und in Abhängigkeit von dem weiteren Anforderungssignal einen weiteren zweiten Audiostrom erzeugt und zu demjenigen zweiten Endpunkt überträgt, von welchem zweiten Endpunkt das weitere Anforderungssignal stammte. Auch dieser Aspekt wurde weiter oben bereits eingehend erörtert und kann insbesondere den Fall betreffen, dass ein Übersetzer/eine Übersetzerin an dem dritten Endpunkt erkennt, dass Teilnehmer an einem zweiten Endpunkt einen weiteren zweiten Audiostrom angefordert haben, beispielsweise also eine Übersetzung des ersten Audiostroms in eine andere Sprache. Unter bestimmten Umständen kann der dritte Endpunkt bzw. der Übersetzer oder die Übersetzerin hierauf reagieren, indem er/sie gezielt einen weiteren zweiten Audiostrom erzeugt und bereitstellt. Auch dieser Aspekt wurde weiter oben bereits ausführlich erörtert.

Vorzugsweise kann dabei vorgesehen sein, dass ein gegebener dritter Endpunkt, also beispielsweise ein Übersetzer oder eine Übersetzerin, nur einen zweiten Audiostrom zu einer gegebenen Zeit erzeugt, denn in der Regel wird der Übersetzer bzw. die Übersetzerin nicht in der Lage sein, gleichzeitig zwei verschiedene Übersetzungen bereitzustellen. Höchst vorzugsweise wird in diesem Zusammenhang der weitere zweite Audiostrom (also die andere Übersetzung) nur erzeugt, wenn gerade kein zweiter Audiostrom (also die ursprüngliche Übersetzung) erzeugt wird. Das betrifft den Fall, dass der Übersetzer bzw. die Übersetzerin feststellt, dass gerade kein zweiter Audiostrom, dafür aber ein weiterer zweiter Audiostrom benötigt wird. Sofern er oder sie hierzu in der Lage ist, kann er/sie dann den genannten weiteren zweiten Audiostrom bereitstellen. Insbesondere wird dies dann der Fall sein, wenn die Anzahl von Teilnehmern, die ursprünglich den zweiten Audiostrom angefordert hatten, auf Null gefallen ist. Die Erfindung ist jedoch keinesfalls auf einen solchen Fall beschränkt.

Wie weiter oben bereits für das Videokonferenzsystem beschrieben wurde, sieht das erfindungsgemäße Verfahren vor, dass der zweite Audiostrom und/oder der weitere zweite Audiostrom durch eine Simultan-Übersetzung des ersten Audiostroms erzeugt wird, vorzugsweise durch eine Humanübersetzung. Es sei an dieser Stelle ausdrücklich darauf hingewiesen, dass die Erfindung keinesfalls auf das Bereitstellen von Humanübersetzungen beschränkt ist. Grundsätzlich besteht die Möglichkeit, dass der dritte Endpunkt zusätzlich oder alternativ zu einer Humanübersetzung eine maschinelle Übersetzung bereitstellt, sofern deren Qualität für einen gegebenen Anwendungsfall akzeptabel ist. Es besteht außerdem die Möglichkeit, dass in Zukunft maschinelle Übersetzungssysteme weiter an Qualität gewinnen, sodass dann im Rahmen der vorliegenden Erfindung bevorzugt auf maschinelle Übersetzungen zurückgegriffen werden kann.

Noch eine andere Ausgestaltung des erfindungsgemäßen Verfahrens sieht vor, dass ein Benutzer des zweiten Endpunkts das Anforderungssignal und/oder das Beendigungssignal auslöst, vorzugsweise über eine grafische Benutzerschnittstelle. Die entsprechende Eingabe kann über Hilfsmittel, wie eine Maus oder dergleichen, oder direkt durch Berührung eines entsprechend berührungsempfindlichen Displays erfolgen. Alternativ bieten sich Sprachkommandos oder eine Gestensteuerung an. Die Erfindung ist hier nicht auf einen bestimmten Eingabemodus beschränkt.

Vorteilhafterweise kann der dritte Endpunkt mit einer Gehörschutz-Einrichtung für den dortigen Teilnehmer (Dolmetscher) z. B. gegen Rückkopplung ausgestattet sein. Um den Teilnehmer vor lauten Pfeiftönen oder anderen lauten und plötzlich auftretenden akustischen Signalen zu schützen, ist die Gehörschutz-Einrichtung dazu ausgebildet, Lautstärkespitzen automatisch aus einem bei dem dritten Endpunkt eintreffenden Audiosignal (Audiostrom) herauszufiltern. So können beispielsweise Hörstürze, Knalltraumata oder andere gesundheitliche Schäden bei Dolmetschern vermieden werden.

Weiterhin kann der dritte Endpunkt (der Dolmetscher) über folgende Bedien-Einrichtungen verfügen bzw. entsprechend ausgestattet sein, beispielsweise in Form eines ein Dolmetscherpults in einer Display-Sidebar, mit folgenden Bedienelementen/Funktionen, die nicht auf die nur exemplarisch angegebenen konkreten Bauformen beschränkt sind:
- Räuspertaste: Falls sich der Dolmetscher räuspern muss, kann er schnell die Übertragung seines Audiostroms unterbrechen.
- Lautstärke-Schieberegler: Der Dolmetscher kann die Lautstärke des Keynote Speakers (Teilnehmer am ersten Endpunkt; erster Audiostrom) verändern. Bei einer Relaisverdolmetschung (Dolmetscher dolmetscht von der Verdolmetschung eines anderen Dolmetschers) kann entsprechend die Lautstärke der ersten Verdolmetschung reguliert werden.
- Privater Sprachkanal zwischen zwei Dolmetschern: Mit einem Knopfdruck können sich zwei Dolmetscher (Teilnehmer an dritten Endpunkten) unterhalten, ohne dass die anderen Teilnehmer des Videokonferenzsystems dies hören.
- Automatische Übergabe auf einen anderen Dolmetscher: Bevor ein Dolmetscher den virtuellen Raum (d. h. das Videokonferenzsystem) verlässt, kann er automatisch mit einem Knopfdruck an einen anderen Dolmetscher übergeben.
- Der Dolmetscher kann den verwendeten Frequenzbereich - insbesondere für den bei ihm eintreffenden ersten Audiostrom - anpassen, damit er über seine eigene Stimme hinweg alles gut verstehen kann.

Weitere Eigenschaften und Vorteile der Erfindung ergeben sich aus der nachfolgenden Beschreibung von Ausführungsbeispielen anhand der Zeichnung.
- Figur 1: zeigt schematisch den Aufbau eines erfindungsgemäßen Videokonferenzsystems;
- Figur 2: zeigt eine Verwendung des Videokonferenzsystems gemäß Figur 1 zur Durchführung eines erfindungsgemäßen Verfahrens;
- Figur 3: zeigt ebenfalls eine Verwendung des Videokonferenzsystems gemäß Figur 1 zur Durchführung eines erfindungsgemäßen Verfahrens; und
- Figur 4: zeigt eine mögliche Ausgestaltung einer Benutzeroberfläche im Rahmen eines erfindungsgemäßen Videokonferenzsystems.

Männliche und weibliche Formen von Begriffen wie "Teilnehmer" oder "Benutzer" werden nachfolgend gleichberechtigt verwendet. Es sollen immer beide Formen mit umfasst sein - auch wenn nicht explizit angegeben.

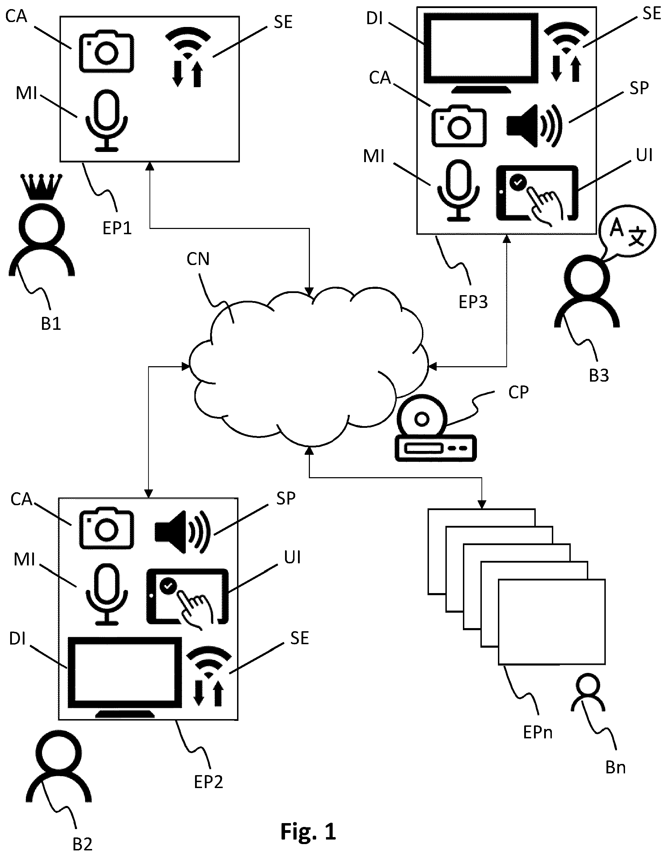

Figur 1 zeigt ein erfindungsgemäßes Videokonferenzsystem mit einer Reihe von Teilnehmern, die an verschiedenen Endpunkten des Videokonferenzsystems angeordnet sind. Grundsätzlich können alle Endpunkte des Videokonferenzsystems technisch gleichwertig ausgestaltet bzw. ausgestattet sein; dies ist in den Figuren nicht dargestellt - hier beschränkt sich die gezeigte technische Ausstattung der einzelnen Endpunkte auf die erfindungsgemäß bzw. im Zuge von Weiterbildungen jeweils erforderliche Ausstattung.

Zur technischen Ausgestaltung der einzelnen Endpunkte des Videokonferenzsystems wurde auch weiter oben im allgemeinen Teil der Beschreibung bereits vorgetragen.

Gemäß Figur 1 umfasst das Videokonferenzsystem zunächst einen ersten Endpunkt EP1, der einem Ausbilder, Präsentator oder allgemein einem VIP-Benutzer zugeordnet ist. Dieser ist in Figur 1 mit dem Bezugszeichen B1 und einer Krone gekennzeichnet. Entsprechend ist ein zweiter Endpunkt EP2 einem zweiten Benutzer B2 und ein dritter Endpunkt EP3 einem dritten Benutzer B3 zugeordnet. Es können weitere Endpunkte EPn existieren, denen entsprechend jeweils wiederum ein Benutzer Bn zugeordnet sein kann. Grundsätzlich ist die Zahl der Endpunkte des Videokonferenzsystems im Rahmen der technischen Möglichkeiten unbeschränkt.

Die genannten Endpunkte EP1 - EPn sind über ein Computernetz CN miteinander verbunden. Vorzugsweise handelt es sich bei dem Computernetz CN um das weltweite Internet oder um ein firmeninternes Intranet. Grundsätzlich ist die Erfindung jedoch nicht auf eine bestimmte Art von Computernetz CN beschränkt.

Die einzelnen Endpunkte EP1 - EPn sind in der Lage, über das Computernetz CN Datenströme auszutauschen, im Rahmen der vorliegenden Erfindung vorzugsweise Audioströme (Ton) und Videoströme (Bild). Um solche Datenströme erzeugen zu können, verfügen alle Endpunkte (EP1 - EPn) über eine Kamera CA und ein Mikrofon MI. Des Weiteren verfügen alle Endpunkte EP1 - EPn über Sende- und Empfangseinrichtungen für die genannten Datenströme, was in Figur 1 bei Bezugszeichen SE symbolisiert ist. Diese können, müssen aber nicht drahtlos ausgebildet sein. Zumindest der zweite Endpunkt EP2 und der dritte Endpunkt EP3 (sowie regelmäßig auch die weiteren Endpunkte EPn) verfügen außerdem über geeignete Ausgabe-/Wiedergabeeinrichtungen für empfangene Datenströme, hier dargestellt in Form eines Displays DI für empfangene Videoströme und eines Lautsprechers SP für empfangene Audioströme. Des Weiteren verfügen zumindest der zweite Endpunkt EP2 und der dritte Endpunkt EP3 über eine Benutzerschnittstelle Ul, die als grafische Benutzerschnittstelle (GUI) ausgebildet sein kann, wie dies insbesondere in Figur 1 symbolisiert ist.

Bei Bezugszeichen CP ist ein Datenträger und ein entsprechendes Lesegerät dargestellt, was verdeutlichen soll, dass entsprechende Programmanweisungen (Programmcode), die/der zum Einrichten des Videokonferenzsystems und seiner Komponenten bzw. zum Ausführen eines erfindungsgemäßen Verfahrens mithilfe des gezeigten Videokonferenzsystems benötigt wird/werden, auf einem entsprechenden Datenträger gespeichert oder speicherbar sein können, um das Videokonferenzsystem entsprechend auszustatten (aufzusetzen). Es ist jedoch grundsätzlich nicht erforderlich, dass die genannten Programmanweisungen auf einem physikalischen Datenträger vorliegen; alternativ oder zusätzlich kommt auch ein Download in entsprechend körperloser Form in Betracht, z. B. aus dem Internet.

Es wurde bereits darauf hingewiesen, dass es sich bei Benutzer B1 um einen Ausbilder oder Präsentator handeln kann. Im Rahmen eines bevorzugten Anwendungsfalls des Videokonferenzsystems handelt es sich bei dem Benutzer B2 um einen "normalen" Teilnehmer, beispielsweise einen/eine Auszubildende/n, der/die einem Vortrag des Präsentators B1 folgen möchte. Benutzer B3 ist in diesem Fall ein Übersetzer oder eine Übersetzerin, wie in Figur 1 anhand der Sprechblase symbolisch dargestellt ist. Auf die Rollenverteilung und die hiermit verbundenen Abläufe wird weiter unten noch genauer eingegangen.

Bei den weiteren Benutzern oder Teilnehmern Bn kann es sich insbesondere um weitere "normale" Teilnehmer entsprechend Teilnehmer B2 oder um weitere Vortragende entsprechend Teilnehmer B1 handeln. Weiter unten werden jedoch auch Anwendungsfälle beschrieben, wonach es sich bei den weiteren Teilnehmern oder Benutzern Bn zumindest teilweise auch um weitere Übersetzer/innen entsprechend Benutzer B3 handeln kann.

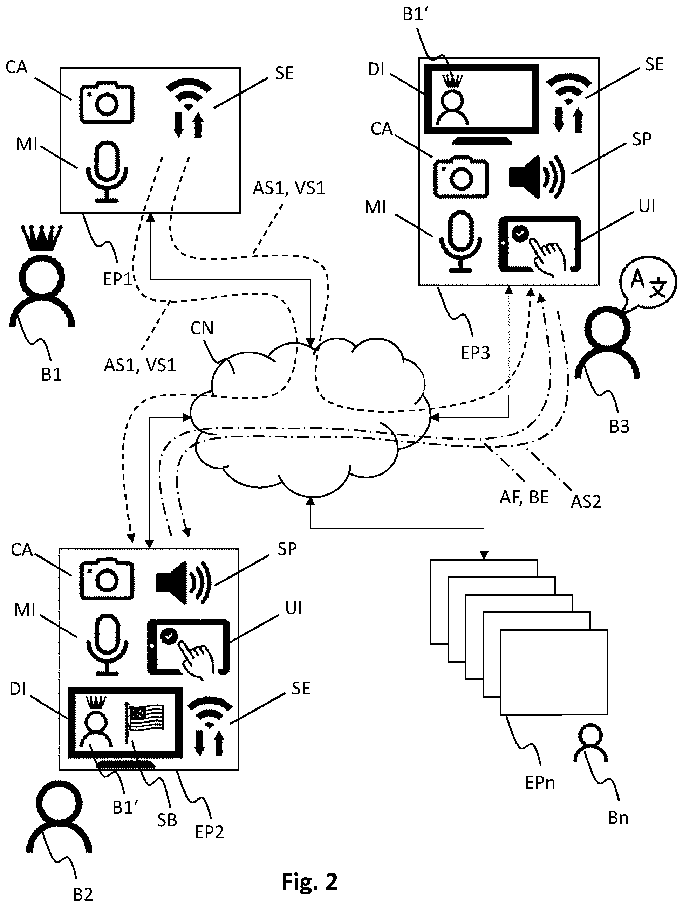

In Figur 2 ist gezeigt, wie das Videokonferenzsystem gemäß Figur 1 vorteilhafterweise verwendet werden kann. Auf diese Weise resultiert ein erfindungsgemäßes Verfahren zum Übertragen von Informationen, hier insbesondere der erwähnten Audio- und Videoströme, mittels Streaming-Technologie über Kommunikationskanäle, welche Kommunikationskanäle zwischen den wenigstens drei Endpunkten EP1 bis EP3 ausgebildet sind.

Der erste Endpunkt EP1 ist dabei zumindest zeitweise, vorteilhafterweise dauerhaft, während einer Präsentation durch Benutzer B1, mit dem zweiten Endpunkt EP2 und dem dritten Endpunkt EP3 über einen entsprechenden Kommunikationskanal verbunden. Der erste Endpunkt EP1 sendet einen ersten Audiostrom mittels der Sendeeinrichtung SE zu dem zweiten Endpunkt EP2 und dem dritten Endpunkt EP3. Dies ist in der Figur mithilfe des Bezugszeichens AS1 dargestellt. Der zweite Endpunkt EP2 und der dritte Endpunkt EP3 geben den Audiostrom AS1 mittels ihrer jeweiligen Wiedergabeeinrichtung SP aus. Parallel sendet der erste Endpunkt EP1 auch einen ersten Videostrom VS1 mittels der Sendeeinrichtung SE zu dem zweiten Endpunkt EP2 und dem dritten Endpunkt EP3. Dies ist in Figur 2 dadurch symbolisiert, dass auf dem Display DI des zweiten Endpunkts EP2 und dem Display des dritten Endpunkts EP3 jeweils ein Bild B1' des Präsentators B1 dargestellt ist. Die Übertragung des ersten Audiostroms AS1 und des ersten Videostroms VS1 erfolgt entlang der Kommunikationskanäle zwischen den Endpunkten über das Computernetz CN, wie in Figur 2 durch gestrichelte Linien symbolisiert ist. Teilnehmer bzw. Benutzer B2 und Teilnehmer bzw. Benutzer B3 können somit den Benutzer (Präsentator) B1 sehen und hören.

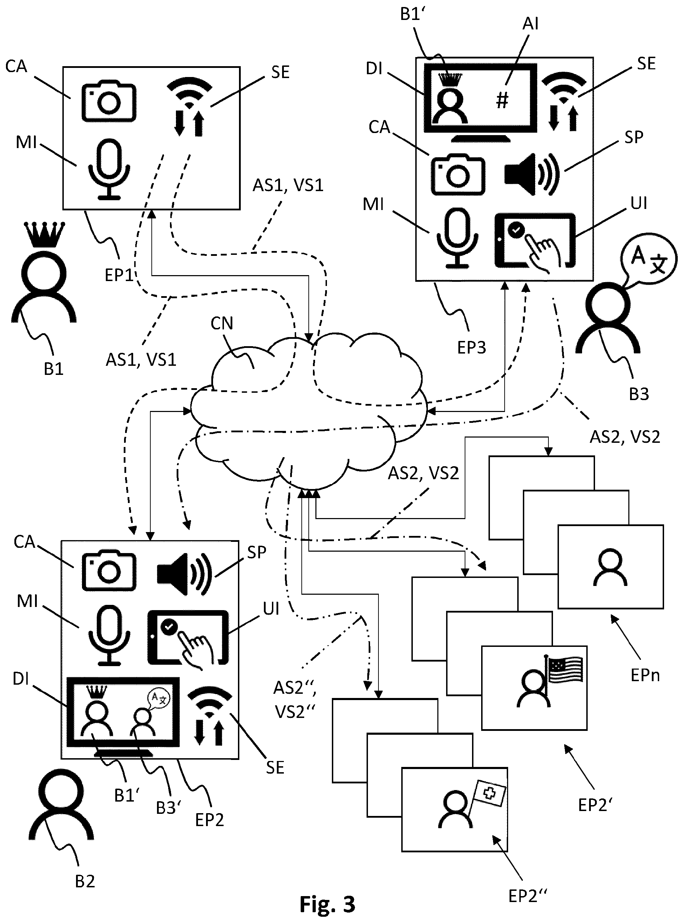

Auf dem Display DI von Benutzer B2 an dem zweiten Endpunkt EP2 wird bei Bezugszeichen SB ein Symbolbild für einen zweiten Audiostrom AS2 angezeigt, welcher der Teilnehmer bzw. Benutzer B2 mithilfe eines Anforderungssignals AF bei dem dritten Endpunkt EP3 bzw. dem zugehörigen Benutzer B3 (Übersetzer/Übersetzerin) anfordern kann. Zu diesem Zweck tätigt Benutzer B2 über seine Benutzerschnittstelle UI eine entsprechende Anforderung bzw. macht eine zugehörige Eingabe, woraufhin Endpunkt EP2 das Anforderungssignal AF zum Endpunkt EP3 sendet. Entweder beginnt Übersetzer/Übersetzerin B3 nach Erhalt des Anforderungssignals AF damit, den angeforderten zweiten Audiostrom AS2 zu erzeugen (über das Mikrofon MI), woraufhin der betreffende Endpunkt EP3 den Audiostrom AS2 zu dem zweiten Endpunkt EP2 überträgt, worauf nachfolgend anhand von Figur 3 noch genauer eingegangen wird. Alternativ erzeugt Benutzer B3 von Anfang an, das heißt seit Beginn der Präsentation durch Benutzer B1 den zweiten Audiostrom AS2; allerdings wird dieser dem Benutzer B2 erst nach Anforderung (Anforderungssignal AF) zur Verfügung gestellt. In Figur 2 sind das Anforderungssignal AF und der zweite Audiostrom AS2 mittels strichpunktierter Linien gekennzeichnet. Die Übertragung erfolgt wiederum entlang entsprechender Kommunikationskanäle über das Computernetz CN.

Auch die weiteren Benutzer Bn können von ihren Endpunkten EPn aus einen entsprechenden zweiten Audiostrom AS2 mittels eines Anforderungssignals AF bei dem betreffenden Endpunkt EP3 anfordern, was in Figur 2 nicht dargestellt ist. Selbstverständlich können auch weitere Endpunkte analog zu dem dritten Endpunkt EP3 in dem Videokonferenzsystem vorhanden sein, die jeweils unterschiedliche zweite Audioströme AS2 ausgeben (können). Dies würde dann analog zu Figur 2 durch verschiedene Symbolbilder SB auf dem Display DI des Benutzers B2 bzw. der weiteren Benutzer Bn angezeigt. Durch die entsprechende Auswahl über die Benutzerschnittstelle UI können die betreffenden Benutzer B2, Bn den jeweils gewünschten zweiten Audiostrom AS2 auswählen und anfordern. In Figur 3 ist schematisch dargestellt, was der Benutzer B2 an dem zweiten Endpunkt EP2 nach Abarbeitung der in Figur 2 gezeigten Verfahrensschritte sieht bzw. hört:

Er bzw. sie empfängt weiterhin den ersten Audiostrom AS1 und den ersten Videostrom VS1 vom Präsentator B1 bzw. vom Endpunkt EP1. Eine entsprechende Ausgabe erfolgt über den Lautsprecher SP und das Display DI, wie bereits erläutert. Außerdem empfängt Benutzer B2 am Endpunkt EP2 den zweiten Audiostrom AS2 von dem dritten Endpunkt EP3. Gemäß der Darstellung in Figur 3 erzeugt der dritte Endpunkt EP3 bzw. der dortige Benutzer (Übersetzer/in) B3 zusätzlich mithilfe seiner Kamera CA einen zweiten Videostrom VS2 und sendet diesen zusammen mit dem zweiten Audiostrom AS2 zu dem zweiten Endpunkt EP2. Endpunkt EP2 gibt über das Display DI zumindest sowohl den ersten Videostrom VS1 als auch den zweiten Videostrom VS2 aus, wie symbolisch dargestellt (Bezugszeichen B1', B3').

Auf dem Display DI des Endpunkts EP3 wird neben dem ersten Videostrom VS1 (Bezugszeichen B1') bei Bezugszeichen Al noch eine Information betreffend eine Anzahl derjenigen (zweiten) Endpunkte angezeigt, die zum angegebenen Zeitpunkt den zweiten Audiostrom AS2 empfangen. Vorliegend existieren eine Reihe von weiteren (zweiten) Endpunkten EP2', die den zweiten Audiostrom AS2 empfangen, wie in Figur 3 anhand der betreffenden Flagge (vgl. Figur 2) symbolisiert ist. Darüber hinaus existieren eine Reihe von anderen (zweiten) Endpunkten EP2", die einen weiteren zweiten Audiostrom AS2" empfangen, der von einem weiteren (nicht dargestellten) dritten Endpunkt analog Endpunkt EP3 stammt. Die Übertragungswege der genannten (weiteren) zweiten Audioströme AS2, AS2" sind in Figur 3 aus Gründen der Übersichtlichkeit nicht vollständig dargestellt.

Der geschilderte Sachverhalt wird in Figur 3 durch eine andere Flagge bei den Endpunkten EP2" symbolisiert, die für eine andere Sprache und entsprechend für einen anderen zweiten Audiostrom AS2" steht.

Obwohl dies aus Gründen der Übersichtlichkeit in Figur 3 ebenfalls nicht dargestellt ist, empfangen die zweiten Endpunkte EP2', EP2" weiterhin den ersten Audiostrom AS1 und den ersten Videostrom VS1 vom Endpunkt EP1. Zusätzlich wird der zweite Videostrom VS2 von dem dritten Endpunkt EP3 übertragen, wie bereits angemerkt. Im Falle der Endpunkte EP2", die einen weiteren zweiten Audiostrom AS2" empfangen, handelt es sich entsprechend um einen zugehörigen weiteren zweiten Videostrom VS2".

Diejenigen Endpunkte EPn, die keinen (weiteren) zweiten Audiostrom angefordert haben, empfangen in herkömmlicher Weise nur den ersten Audiostrom AS1 und den ersten Videostrom VS1, was in Figur 3 aus Gründen der Übersichtlichkeit nicht weiter eingezeichnet ist.

Es wurde bereits darauf hingewiesen, dass grundsätzlich alle Endpunkte des Videokonferenzsystems technisch gleichartig ausgebildet sein können, was in den Figuren aus Gründen der Übersichtlichkeit nicht explizit gezeigt ist. Grundsätzlich spricht jedoch nichts dagegen, mit technisch unterschiedlich ausgestatteten Endpunkten das beschriebene Videokonferenzsystem aufzusetzen, solange die einzelnen Endpunkte über die jeweils erforderlichen Fähigkeiten zur Teilnahme an dem Videokonferenzsystem verfügen.

Es wurde bereits darauf hingewiesen, dass insbesondere der Endpunkt EP2 sowohl den ersten Audiostrom AS1 als auch den angeforderten zweiten Audiostrom AS2 empfängt. Vorzugsweise werden beide Audioströme AS1, AS2 über den Lautsprecher SP der Wiedergabeeinrichtung zeitgleich ausgegeben, wobei allerdings vorzugsweise der angeforderte zweite Audiostrom AS2 automatisch lauter ausgegeben wird, als der erste Audiostrom AS1. Bei Bedarf kann der Benutzer B2 dies über die Benutzerschnittstelle UI anpassen.

Unter erneuter Bezugnahme auf Figur 2 sei noch angemerkt, dass der Benutzer B2 am Endpunkt EP2 analog zur Anforderung des zweiten Audiostroms AS2 mithilfe des Anforderungssignals AF auch ein Beendigungssignal BE an dem dritten Endpunkt EP senden kann. Nach Erhalt eines solchen Beendigungssignals BE stoppt der dritte Endpunkt EP3 die Übertragung des zweiten Audiostroms AS2 an den Endpunkt EP2 bzw. eine entsprechende Bereitstellung. Das Videokonferenzsystem kehrt dann in den in Figur 2 gezeigten (Anfangs-)Zustand zurück (mit angezeigtem Symbolbild SB beim Endpunkt EP2). In einem solchen Fall reduziert sich der bei Bezugszeichen Al gemäß Figur 3 am Endpunkt EP3 angezeigte Wert um Eins (1). Der dritte Benutzer B3 ist also jederzeit in der Lage zu erkennen, ob noch Teilnehmer B2 auf den zweiten Audiostrom AS2 angewiesen sind und könnte gegebenenfalls, bei Al = 0, die Erzeugung des zweiten Audiostroms AS2 einstellen (um beispielsweise einem weiteren Audiostrom AS2" gemäß Figur 3 zu erzeugen, falls er/sie hierzu in der Lage ist).

Noch nicht weiter eingegangen wurde bislang auf die mögliche Funktion des U-ser-Interface (Benutzerschnittstelle) UI des Endpunkts EP3. Vorteilhafterweise ermöglicht die genannte Benutzerschnittstelle UI es dem Benutzer (Teilnehmer) B3, in dem vorliegend geschilderten Anwendungsfall dem Übersetzer bzw. der Übersetzerin, einen sog. Sprachkanal, das heißt wenigstens eine Art oder Eigenschaft des von ihm/ihr erzeugten zweiten Audiostroms AS2 bzw. AS2" auszuwählen. Auf diese Weise kann ein und derselbe Benutzer B3 vorteilhafterweise unterschiedliche zweite Audioströme AS2, AS2' bereitstellen, was vorzugsweise nicht gleichzeitig geschehen kann. Wenn also beispielsweise der Übersetzer/die Übersetzerin B3 anhand der Anzeige bei Bezugszeichen Al (Figur 3) erkennt, dass der zweite Audiostrom AS2 nicht mehr benötigt wird, kann er/sie bei Bedarf einen anderen (weiteren) zweiten Audiostrom AS2" zur Verfügung stellen und dies über die Benutzerschnittstelle UI in dem Videokonferenzsystem anzeigen (so dass sich beispielsweise die angezeigten Symbolbilder SB entsprechend anpassen, bevorzugt automatisch).

Es wurde an anderer Stelle bereits darauf hingewiesen, dass das beschriebene Videokonferenzsystem auch dann vorteilhaft funktioniert, wenn der dritte Endpunkt EP3 anstelle des zweiten Audiostroms AS2 ausschließlich einen zweiten Videostrom VS2 zur Verfügung stellt, der beispielsweise eine Übersetzung des ersten Audiostroms AS1 in eine Gebärdensprache beinhaltet. Dies ist in den Figuren nicht explizit gezeigt, stellt aber ausdrücklich eine vorteilhafte alternative Ausgestaltung der beschriebenen Erfindung dar.

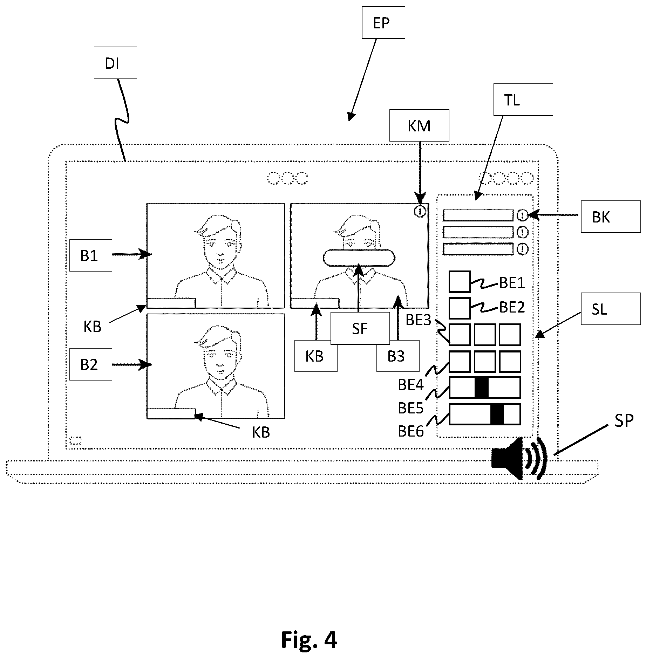

Figur 4 zeigt abschließend eine mögliche Anzeige auf dem Display DI (vgl. Figuren 1 bis 3) eines Teilnehmers an einer Videokonferenz, die mithilfe des vorstehend beschriebenen Videokonferenzsystems durchgeführt wird. Gemäß der exemplarischen Darstellung in Figur 4 sind wiederum drei Teilnehmer anwesend, die in Anlehnung an die Figuren 1 bis 3 mit dem Bezugszeichen B1 bis B3 bezeichnet sind. Wie der Fachmann leicht erkennt, handelt es sich hierbei um eine Vereinfachung, da die beschriebenen Funktionen selbstverständlich auch auf größere Teilnehmerzahlen übertragbar sind.

In Figur 4 wird das Gerät, mit dem der betreffende Teilnehmer in der Videokonferenz teilnimmt, vorliegend ohne Beschränkung ein Notebook- oder Laptop-Computer, in Anlehnung an die Figuren 1 bis 3 mit dem Bezugszeichen EP (Endpunkt) bezeichnet.

Wie vorstehend anhand der Figuren 1 bis 3 bereits beschrieben wurde, ist jedem der drei Teilnehmer B1 bis B3 im Vorfeld der Videokonferenz eine bestimmte Teilnehmerrolle zugewiesen worden, wodurch die jeweils damit verbundenen Funktionen, auf die anhand der Figuren 1 bis 3 bereits detailliert eingegangen wurde, freigeschaltet worden sind. Die jeweilige Rolle ist durch eine entsprechende Kennzeichnung und Beschreibung bei Bezugszeichen KB ersichtlich, die das jeweilige Videobild des Teilnehmers B1 bis B3 überlagert.

In dem Beispiel gemäß Figur 4 hat der Teilnehmer B1 die Rolle des Vortragenden, der Teilnehmer B3 hat die Rolle des Dolmetschers, und der Teilnehmer B2 möchte als Zuhörer dem Vortrag folgen.

Sobald der Vortragende B1 zu sprechen beginnt, nimmt der Dolmetscher B3 bevorzugt seine Tätigkeit auf und beginnt ebenfalls zu sprechen bzw. zu übersetzen. Entsprechend erzeugt der Vortragende B1 den ersten Audiostrom AS1 (vgl. Figuren 1 bis 3), während der Dolmetscher B3 den zugehörigen zweiten Audiostrom AS2 (vgl. Figuren 1 bis 3) erzeugt. Aufgrund der dem Dolmetscher zugewiesenen Rolle ist dessen Tonausgabe für Benutzer B2 zunächst nicht hörbar, da die genannte Tonausgabe nicht von jedem Teilnehmer benötigt wird.

Um den Dolmetscher B3 hörbar zu machen, aktiviert der betreffende Zuhörer B2 die Tonausgabe des Dolmetschers über ein Kontextmenü KM auf seiner grafischen Benutzerschnittstelle, sendet also das Anforderungssignal, wie bereits beschrieben. Das Kontextmenü KM überlagert gemäß Figur 4 das Videobild des Dolmetschers B3. Das Kontextmenü KM wird durch Mausklick (oder alternativ durch Berührung, Sprachbefehl oder dergleichen) ausgelöst und zeigt dann eine Schaltfläche SF zur Aktivierung oder Deaktivierung der Dolmetscherfunktion. Dies entspricht funktional dem weiter oben ausführlich beschriebenen Anforderungssignal bzw. Beendigungssignal. Das Kontextmenü KM ist zusätzlich auch über einen sogenannten Benutzerkontext BK zusammen mit einer Teilnehmerliste TL in einer angezeigten Seitenleiste oder (Display-)Sidebar SL abrufbar.

Sobald der Zuhörer B2 die Dolmetscherfunktion aktiviert hat, wird der vom Dolmetscher B3 stammende Audiostrom AS2 (vgl. Figuren 1 bis 3) mittels des Lautsprechers SP ausgegeben, und zwar gleichzeitig mit dem vom Vortragenden B1 stammenden Audiostrom AS1 (vgl. Figuren 1 bis 3) und gegebenenfalls mit weiteren Audioströmen, die von anderen Teilnehmern der Videokonferenz stammen können. Dabei wird die Lautstärke der Tonausgaben aller anwesenden Teilnehmer, auch des Vortragenden B1, gegenüber dem Dolmetscher B3 deutlich reduziert und so durch die Tonausgabe des Dolmetschers B3 überlagert. Zugleich empfängt der EP auch einen Videostrom des Dolmetschers B3 (Videostrom VS2, vgl. Figuren 2 und 3) und gibt diesen zusammen mit dem Videobild des Vortragenden B1 (Videostrom VS1, vgl. Figuren 2 und 3) aus. Des Weiteren wird ein Videobild des Benutzers B2 angezeigt, wie von herkömmlichen Videokonferenzsystemen hinreichend bekannt ist.

Es können - wie bereits erwähnt - auch weitere Benutzer der Kategorie B1 vorhanden sein. Hierbei ist es vorteilhafter Weise so, dass erst bei Deaktivierung des Anforderungssignals AF der Benutzer B2 alle Sprecher (Benutzer B1) wieder in voller Lautstärke hört. Solange das Anforderungssignal AF aktiviert ist, ist vorteilhafterweise immer Dolmetscher B3 mit voller Lautstärke zu hören, egal wer spricht.

Es wurde bereits darauf hingewiesen, dass mehrere Dolmetscher B3 gleichzeitig an einer Videokonferenz teilnehmen können, wobei jedoch pro Teilnehmer B2 vorteilhafterweise gleichzeitig immer nur ein Dolmetscher B3 aktiviert sein kann.

Anstelle eines Bildes des Dolmetschers B3 kann anfangs, das heißt vor Aktivierung der Dolmetscherfunktion, auch ein Symbolbild angezeigt werden, wie weiter oben detailliert beschrieben; das Bild des Dolmetschers B3 erscheint erst mit Aktivierung der Dolmetscherfunktion bzw. solange diese aktiv ist.

Der Dolmetscher B3 kann auf seinem Display DI zusätzliche Auswahlmöglichkeiten angezeigt bekommen, insbesondere eine Anzahl derzeitiger Empfänger des von ihm erzeugten Audiostroms und/oder Möglichkeiten zur Sprachauswahl, worauf weiter oben bereits eingehend hingewiesen wurde.

Figur 4 betrifft in erster Linie die sichtbare Anzeige bzw. Benutzeroberfläche bei einem Endpunkt EP des beschriebenen Videokonferenzsystems. Für die konstruktivtechnische Ausgestaltung des Videokonferenzsystems und die verfahrenstechnischen Abläufe innerhalb desselben sei auf die vorstehende Beschreibung der Figuren 1 bis 3 verwiesen. Insbesondere der Dolmetscher B3 verfügt über eine Gehörschutz-Einrichtung, worauf bereits hingewiesen wurde. Diese kann in den betreffenden Endpunkt integriert sein (nicht gezeigt).

Speziell der Dolmetscher B3 kann auf dem Display, z. B. in der Sidebar, weitere Bedienelemente BE1-BE6 zur Verfügung haben, auf die im allgemeinen Teil der Beschreibung schon hingewiesen wurde.

BE1 bezeichnet eine Freischalt-Einrichtung, mit deren Hilfe sich der dritte Endpunkt (der Dolmetscher) selbst freischaltet, sobald er einsatzbereit für die Verdolmetschung ist.

BE2 bezeichnet eine Räuspertaste, mit der der Dolmetscher schnell die Übertragung seines Audiostroms unterbrechen (stummschalten) kann, falls er sich räuspern muss.

BE3 bezeichnet ein Bedienelement zur automatischen Eröffnung eines privaten Sprachkanals zwischen zwei Dolmetschern: Mit einem Knopfdruck können sich zwei Dolmetscher (Teilnehmer an dritten Endpunkten) unterhalten, ohne dass die anderen Teilnehmer des Videokonferenzsystems dies hören. Gemäß Figur 4 kann für jeden weiteren Dolmetscher ein entsprechender Knopf oder dgl. vorhanden sein.

BE4 bezeichnet ein Bedienelement zur automatischen Übergabe auf einen anderen Dolmetscher: Bevor ein Dolmetscher den virtuellen Raum (d. h. das Videokonferenzsystem) verlässt, kann er automatisch mit einem Knopfdruck oder dgl. an einen anderen Dolmetscher übergeben. Gemäß Figur 4 kann für jeden weiteren Dolmetscher ein entsprechender Knopf oder dgl. vorhanden sein.

BE5 bezeichnet einen Lautstärke-Schieberegler: Der Dolmetscher kann die Lautstärke des Keynote Speakers (Vortragender B1, Teilnehmer am ersten Endpunkt; erster Audiostrom) verändern. Bei einer Relaisverdolmetschung (Dolmetscher dolmetscht von der Verdolmetschung eines anderen Dolmetschers) kann entsprechend mit Bedienelement BE5 die Lautstärke der ersten Verdolmetschung reguliert werden.

BE6 schließlich bezeichnet einen weiteren Schieberegler, mit dem der Dolmetscher den verwendeten Frequenzbereich - insbesondere für den bei ihm eintreffenden ersten Audiostrom - anpassen kann, damit er über seine eigene Stimme hinweg alles gut versteht.

Die Erfindung ist insbesondere nicht hinsichtlich der Art und Anzahl der Bedienelemente BE1-BE6 beschränkt.

## Patentansprüche

1. Videokonferenzsystem ausgebildet zum bidirektionalen Übertragen von Video- und Audiosignalen mittels Streaming-Technologie zwischen wenigstens drei Endpunkten (EP1-EP3), die jeweils eine Sendeeinrichtung und/oder eine Empfangseinrichtung (SE) für Audioströme (AS1, AS2, AS2") und/oder für Videoströme (VS1, VS2, VS2") aufweisen, umfassend:
i. wenigstens einen ersten Endpunkt (EP1) mit zumindest einer Sendeeinrichtung (SE) für Audioströme und vorzugsweise auch mit einer Sendeeinrichtung (SE) für Videoströme;
ii. wenigstens einen zweiten Endpunkt (EP2) mit einer Empfangseinrichtung (SE) für Audioströme;
iii. wenigstens einen dritten Endpunkt (EP3) mit zumindest einer Sendeeinrichtung (SE) für Audioströme und einer Empfangseinrichtung (SE) für Audioströme;
bei dem
a) der erste Endpunkt (EP1) mit dem zweiten Endpunkt (EP2) und dem dritten Endpunkt (EP3) verbunden ist, um einen ersten Audiostrom (AS1) mittels der Sendeeinrichtung (SE) für Audioströme zu dem zweiten Endpunkt (EP2) und dem dritten Endpunkt (EP3) zu übertragen und um vorzugsweise parallel zu dem ersten Audiostrom (AS1) auch einen ersten Videostrom (VS1) mittels der Sendeeinrichtung (SE) für Videoströme zumindest zu dem zweiten Endpunkt (EP2) zu übertragen;
b) der zweite Endpunkt (EP2) über eine Anforderungseinrichtung, vorzugsweise eine grafische Benutzerschnittstelle (UI), verfügt und mit dem dritten Endpunkt (EP3) verbunden ist, um selektiv einen zweiten Audiostrom (AS2) mittels eines durch die Anforderungseinrichtung erzeugten oder erzeugbaren Anforderungssignals (AF) bei dem dritten Endpunkt (EP3) anzufordern und mittels der Empfangseinrichtung (SE) von dem dritten Endpunkt (EP3) zu empfangen, welcher zweite Audiostrom (AS2) von dem ersten Audiostrom (AS1) abgeleitet ist;
c) der dritte Endpunkt (EP3) dazu ausgebildet ist, den ersten Audiostrom (AS1) von dem ersten Endpunkt (EP1) und das Anforderungssignal (AF) von dem zweiten Endpunkt (EP2) zu empfangen und in Abhängigkeit von dem Anforderungssignal (AF) den zweiten Audiostrom (AS2) zu erzeugen und zu dem zweiten Endpunkt (EP2) zu übertragen;
**dadurch gekennzeichnet, dass**
der dritte Endpunkt (EP3) eingerichtet ist, den Empfang eines weiteren Anforderungssignals (AF) bei einem weiteren dritten Endpunkt (EP3) zu erkennen und in Abhängigkeit von dem weiteren Anforderungssignal (AF) einen weiteren zweiten Audiostrom (AS2") zu erzeugen und zu demjenigen zweiten Endpunkt (EP2") zu übertragen, von welchem zweiten Endpunkt (EP2") das weitere Anforderungssignal (AF) stammte, wobei vorzugsweise ein gegebener dritter Endpunkt (EP3) zum Erzeugen nur eines zweiten Audiostroms (AS2, AS2") zu einer gegebenen Zeit ausgebildet ist und wobei höchst vorzugsweise der weitere zweite Audiostrom (AS2") nur erzeugbar ist, wenn gerade kein zweiter Audiostrom (AS2) erzeugt wird; und dass der zweite Audiostrom (AS2) und/oder der weitere zweite Audiostrom (AS2") eine Simultan-Übersetzung des ersten Audiostroms (AS1) ist, vorzugsweise eine Humanübersetzung.

2. Videokonferenzsystem nach Anspruch 1, bei dem
der zweite Endpunkt (EP2) dazu ausgebildet ist, mittels der Empfangseinrichtung (SE) den ersten Audiostrom (AS1) und den zweiten Audiostrom (AS2) zeitgleich zu empfangen und mittels einer Wiedergabeeinrichtung (SP) zeitgleich auszugeben, vorzugsweise mit unterschiedlichen Lautstärken auszugeben, höchst vorzugsweise den ersten Audiostrom (AS1) mit einer gegenüber dem zweiten Audiostrom (AS2) verminderten Lautstärke.

3. Videokonferenzsystem nach Anspruch 1 oder 2, bei dem der dritte Endpunkt (EP3) dazu ausgebildet ist, den zweiten Audiostrom (AS2) nur zu einem zweiten Endpunkt (EP2) zu übertragen, von dem das Anforderungssignal (AF) empfangen wurde.

4. Videokonferenzsystem nach einem der Ansprüche 1 bis 3, bei dem der zweite Endpunkt (EP2) dazu ausgebildet ist, mittels der Anforderungseinrichtung (UI) selektiv den zweiten Audiostrom (AS2) mittels eines durch die Anforderungseinrichtung (UI) erzeugten oder erzeugbaren Beendigungssignal (BE) bei dem dritten Endpunkt (EP3) abzubestellen, und der dritte Endpunkt (EP3) dazu ausgebildet ist, den zweiten Audiostrom (AS2) nur zu einem zweiten Endpunkt (EP2) zu übertragen, von dem kein Beendigungssignal (BE) empfangen wurde.

5. Videokonferenzsystem nach einem der Ansprüche 1 bis 4, bei dem eine Mehrzahl an dritten Endpunkten (EP3) vorhanden ist, die jeweils unterschiedliche zweite Audioströme (AS2, AS2") bereitstellen, wobei durch den zweiten Endpunkt (EP2) ein bestimmter zweiter Audiostrom (AS2, AS") durch Aussenden des Anforderungssignals (AF) an einen bestimmten dritten Endpunkt (EP3) selektiv anforderbar ist.

6. Videokonferenzsystem nach einem der Ansprüche 1 bis 5, bei dem zumindest der zweite Endpunkt (EP2) zusätzlich über eine Empfangseinrichtung (SE) für Videoströme verfügt und zumindest der dritte Endpunkt (EP3) zusätzlich über eine Sendeeinrichtung (SE) für Videoströme verfügt, welche Sendeeinrichtung (SE) eingerichtet ist, bei Empfang des Anforderungssignals (AF) von dem zweiten Endpunkt (EP2) parallel zu dem zweiten Audiostrom (AS2) einen zweiten Videostrom (VS2) zu dem zweiten Endpunkt (EP2) zu übertragen.

7. Videokonferenzsystem nach einem der Ansprüche 1 bis 6, bei dem der dritte Endpunkt (EP3) über eine Anzeigeeinrichtung (DI) verfügt, die eine Anzahl von zweiten Endpunkten (EP2) anzeigt, von denen das Anforderungssignal (AF) empfangen wurde und die zu einem gegebenen Zeitpunkt den zweiten Audiostrom (AS2) empfangen.

8. Videokonferenzsystem nach einem der Ansprüche 1 bis 7, bei dem der zweite Audiostrom (AS2) eine Simultan-Übersetzung eines anderen zweiten Audiostroms ist, vorzugsweise eine Humanübersetzung; und/oder der dritte Endpunkt (EP3) über ein Bedienelement (BE2) verfügt, mit dem die Übertragung des zweiten Audiostroms (AS2) zeitweise unterbrechbar ist.

9. Verfahren zum Übertragen von Informationen mittels Streaming-Technologie über Kommunikationskanäle zwischen wenigstens drei Endpunkten (EP1-EP3), die jeweils eine Sendeeinrichtung und/oder eine Empfangseinrichtung (SE) für Audioströme und/oder für Videoströme aufweisen, bei dem:
a) ein erster Endpunkt (EP1) zumindest zeitweise mit einem zweiten Endpunkt (EP2) und mit einem dritten Endpunkt (EP3) über einen entsprechenden Kommunikationskanal verbunden wird und einen ersten Audiostrom (AS1) mittels der Sendeeinrichtung (SE) für Audioströme zu dem zweiten Endpunkt (EP2) und zu dem dritten Endpunkt (EP3) überträgt, während der erste Endpunkt (EP1) vorzugsweise parallel zu dem ersten Audiostrom (AS1) auch einen ersten Videostrom (VS1) mittels der Sendeeinrichtung (SE) für Videoströme zumindest zu dem zweiten Endpunkt (EP2) überträgt;
b) der zweite Endpunkt (EP2) zumindest zeitweise mit dem dritten Endpunkt (EP3) über einen entsprechenden Kommunikationskanal verbunden wird, um selektiv einen zweiten Audiostrom (AS2) mittels eines Anforderungssignals (AF) bei dem dritten Endpunkt (EP3) anzufordern und von dem dritten Endpunkt (EP3) zu empfangen, welcher zweite Audiostrom (AS2) von dem ersten Audiostrom (AS1) abgeleitet wird;
c) der dritte Endpunkt (EP3) den ersten Audiostrom (AS1) von dem ersten Endpunkt (EP1) und das Anforderungssignal (AF) von dem zweiten Endpunkt (EP2) empfängt und in Abhängigkeit von dem Anforderungssignal (AF) den zweiten Audiostrom (AS2) aus dem ersten Audiostrom (AS1) erzeugt und zu dem zweiten Endpunkt (EP2) überträgt;
d) der zweite Endpunkt (EP2) zumindest den zweiten Audiostrom (AS2) ausgibt, vorzugsweise den ersten Audiostrom (AS1) und den zweiten Audiostrom (AS2) zeitgleich empfängt und zeitgleich ausgibt, höchst vorzugsweise den ersten Audiostrom (AS1) und den zweiten Audiostrom (AS2) mit unterschiedlichen Lautstärken ausgibt, insbesondere den ersten Audiostrom (AS1) mit einer gegenüber dem zweiten Audiostrom (AS2) verminderten Lautstärke;
**dadurch gekennzeichnet, dass**
der dritte Endpunkt (EP3) den Empfang eines weiteren Anforderungssignals (AF) bei einem weiteren dritten Endpunkt (EP3) erkennt und in Abhängigkeit von dem weiteren Anforderungssignal (AF) einen weiteren zweiten Audiostrom (AS2") erzeugt und zu demjenigen zweiten Endpunkt (EP2") überträgt, von welchem zweiten Endpunkt (EP2") das weitere Anforderungssignal (AF) stammte, wobei vorzugsweise ein gegebener dritter Endpunkt (EP3) nur einen zweiten Audiostrom (AS2, AS2") zu einer gegebenen Zeit erzeugt und wobei höchst vorzugsweise der weitere zweite Audiostrom (AS2") nur erzeugt wird, wenn gerade kein zweiter Audiostrom (AS2) erzeugt wird; und dass
der zweite Audiostrom (AS2) und/oder der weitere zweite Audiostrom (AS2") durch eine Simultan-Übersetzung des ersten Audiostroms (AS1) erzeugt wird, vorzugsweise durch eine Humanübersetzung; wobei höchst vorzugsweise einem Benutzer (B2) des zweiten Endpunkts (EP2) ein Videostrom (VS2) eines Humanübersetzers zusammen mit einem Audiostrom (AS2) der Humanübersetzung ausgegeben wird.

10. Verfahren nach Anspruch 9, bei dem
der dritte Endpunkt (EP3) den zweiten Audiostrom (AS2) nur zu einem zweiten Endpunkt (EP2) überträgt, von dem das Anforderungssignal (AF) empfangen wurde; und bei dem vorzugsweise der zweite Endpunkt (EP2) selektiv den zweiten Audiostrom (AS2) mittels eines Beendigungssignals (BE) bei dem dritten Endpunkt (EP3) abbestellt, während der dritte Endpunkt (EP3) den zweiten Audiostrom (AS2) nur zu einem zweiten Endpunkt (EP2) überträgt, von dem kein Beendigungssignal (BE) empfangen wurde.

11. Verfahren nach Anspruch 9 oder 10, bei dem
eine Mehrzahl an dritten Endpunkten (EP3) jeweils unterschiedliche zweite Audioströme (AS2, AS2") bereitstellen, wobei der zweite Endpunkt (EP2) einen bestimmten zweiten Audiostrom (AS2, AS2") durch Aussenden des Anforderungssignals (AF) an einen bestimmten dritten Endpunkt (EP3) selektiv anfordert.

12. Verfahren nach einem der Ansprüche 9 bis 11, bei dem der dritte Endpunkt (EP3) bei Empfang des Anforderungssignals (AF) von dem zweiten Endpunkt (EP2) parallel zu dem zweiten Audiostrom (AS2) einen zweiten Videostrom (VS2) zu dem zweiten Endpunkt (EP2) überträgt.

13. Verfahren nach einem der Ansprüche 9 bis 12, bei dem der dritte Endpunkt (EP3) eine Anzahl von zweiten Endpunkten (EP2) anzeigt, von denen das Anforderungssignal (AF) empfangen wurde und die zu einem gegebenen Zeitpunkt den zweiten Audiostrom (AS2) empfangen.

14. Verfahren nach einem der Ansprüche 9 bis 13, bei dem der zweite Audiostrom (AS2) durch eine Simultan-Übersetzung eines anderen zweiten Audiostroms erzeugt wird, vorzugsweise durch eine Humanübersetzung.

15. Computerprogrammprodukt (CP) mit auf einem physikalischen Datenträger gespeicherten oder speicherbaren Programminformationen, bei deren Ausführung auf einem Computersystem mit wenigstens drei über Kommunikationskanäle verbundenen oder verbindbaren Endpunkten (EP1-EP3), die jeweils eine Sendeeinrichtung (SE) und/oder eine Empfangseinrichtung (SE) für Audioströme und/oder für Videoströme aufweisen,
a) ein Videokonferenzsystem zum bidirektionalen Übertragen von Video- und Audiosignalen gemäß einem der Ansprüche 1 bis 8 ausgebildet und/oder
b) ein Verfahren zum Übertragen von Informationen zwischen den wenigstens drei Endpunkten (EP1-EP3) gemäß einem der Ansprüche 9 bis 14 ausgeführt wird.

## Claims

1. A video conferencing system designed for bidirectional transmission of video and audio signals by means of streaming technology between at least three endpoints (EP1-EP3), each of which has a transmitting apparatus and/or a receiving apparatus (SE) for audio streams (AS1, AS2, AS2") and/or for video streams (VS1, VS2, VS2"), having:
i) at least one first endpoint (EP1) with at least one transmitting apparatus (SE) for audio streams and preferably also with a transmitting apparatus (SE) for video streams;
ii) at least one second endpoint (EP2) with a receiving apparatus (SE) for audio streams;
iii) i. at least one third endpoint (EP3) with at least one transmitting apparatus (SE) for audio streams and a receiving apparatus (SE) for audio streams;
in which
a) the first endpoint (EP1) is connected to the second endpoint (EP2) and the third endpoint (EP3) in order to transmit a first audio stream (AS1) to the second endpoint (EP2) and the third endpoint (EP3) by means of the transmitting apparatus (SE) for audio streams and, preferably in parallel with the first audio stream (AS1), also to transmit a first video stream (VS1) by means of the transmitting apparatus (SE) for video streams at least to the second endpoint (EP2);
b) the second endpoint (EP2) has a request apparatus, preferably a graphical user interface (UI), and is connected to the third endpoint (EP3) in order to selectively request a second audio stream (AS2) from the third endpoint (EP3) by means of a request signal (AF) generated or capable of being generated by the request apparatus and to receive it from the third endpoint (EP3) by means of the receiving apparatus (SE), which second audio stream (AS2) is derived from the first audio stream (AS1);
c) the third endpoint (EP3) is designed to receive the first audio stream (AS1) from the first endpoint (EP1) and the request signal (AF) from the second endpoint (EP2) and, depending on the request signal (AF), to generate the second audio stream (AS2) and transmit it to the second endpoint (EP2);
**characterized in that**
the third endpoint (EP3) is set up to detect the reception of a further request signal (AF) at a further third endpoint (EP3) and, depending on the further request signal (AF), to generate a further second audio stream (AS2") and to transmit it to the second endpoint (EP2") from which second endpoint (EP2") the further request signal (AF) originated, wherein preferably a given third endpoint (EP3) is designed to generate only one second audio stream (AS2, AS2") at a given time, and wherein most preferably the further second audio stream (AS2") can only be generated when no second audio stream (AS2) is currently being generated; and **in that** the second audio stream (AS2) and/or the further second audio stream (AS2") is a simultaneous translation of the first audio stream (AS1), preferably a human translation.

2. The videoconferencing system according to claim 1, in which
the second endpoint (EP2) is designed to receive the first audio stream (AS1) and the second audio stream (AS2) simultaneously by means of the receiving apparatus (SE) and to output them simultaneously by means of a playback device (SP), preferably at different volumes, most preferably outputting the first audio stream (AS1) at a lower volume than the second audio stream (AS2).

3. The videoconferencing system according to claim 1 or 2, in which
the third endpoint (EP3) is designed to transmit the second audio stream (AS2) only to a second endpoint (EP2) from which the request signal (AF) was received.

4. The videoconferencing system according to any one of claims 1 to 3, in which
the second endpoint (EP2) is designed to selectively cancel the second audio stream (AS2) at the third endpoint (EP3) by means of the request apparatus (UI) by means of a termination signal (BE) generated or capable of being generated by the request apparatus (UI), and the third endpoint
(EP3) is designed to transmit the second audio stream (AS2) only to a second endpoint (EP2), from which no termination signal (BE) was received.

5. The videoconferencing system according to any one of claims 1 to 4, in which
a plurality of third endpoints (EP3) is present, each of which provides different second audio streams (AS2, AS2"), wherein a specific second audio stream (AS2, AS") can be selectively requested by the second endpoint (EP2) by sending the request signal (AF) to a specific third endpoint (EP3).

6. The videoconferencing system according to any one of claims 1 to 5, in which
at least the second endpoint (EP2) additionally has a receiving apparatus (SE) for video streams, and at least the third endpoint (EP3) additionally has a transmitting apparatus (SE) for video streams, which transmitting apparatus (SE) is set up to transmit a second video stream (VS2) to the second endpoint (EP2) in parallel with the second audio stream (AS2) upon receipt of the request signal (AF) from the second endpoint (EP2).

7. The videoconferencing system according to any one of claims 1 to 6, in which
the third endpoint (EP3) has a display apparatus (DI) that displays a number of second endpoints (EP2) from which the request signal (AF) was received and which receive the second audio stream (AS2) at a given time.

8. The videoconferencing system according to any one of claims 1 to 7, in which
the second audio stream (AS2) is a simultaneous translation of another second audio stream, preferably a human translation; and/or the third endpoint (EP3) has a control element (BE2) with which the transmission of the second audio stream (AS2) can be temporarily interrupted.

9. A method for transmitting information by means of streaming technology via communication channels between at least three endpoints (EP1-EP3), each of which has a transmitting apparatus and/or a receiving apparatus (SE) for audio streams and/or for video streams, in which:
a) a first endpoint (EP1) is connected at least temporarily to a second endpoint (EP2) and to a third endpoint (EP3) via a corresponding communication channel and transmits a first audio stream (AS1) to the second endpoint (EP2) and to the third endpoint (EP3) by means of the transmitting apparatus (SE) for audio streams, while the first endpoint (EP1) preferably transmits, in parallel with the first audio stream (AS1), a first video stream (VS1) by means of the transmitting apparatus (SE) for video streams at least to the second endpoint (EP2);
b) the second endpoint (EP2) is connected at least temporarily to the third endpoint (EP3) via a corresponding communication channel in order to selectively request a second audio stream (AS2) from the third endpoint (EP3) by means of a request signal (AF) and to receive it from the third endpoint (EP3), which second audio stream (AS2) is derived from the first audio stream (AS1);
c) the third endpoint (EP3) receives the first audio stream (AS1) from the first endpoint (EP1) and the request signal (AF) from the second endpoint (EP2) and, depending on the request signal (AF), generates the second audio stream (AS2) from the first audio stream (AS1) and transmits it to the second endpoint (EP2);
d) the second endpoint (EP2) outputs at least the second audio stream (AS2), preferably receives the first audio stream (AS1) and the second audio stream (AS2) simultaneously and outputs them simultaneously, most preferably outputs the first audio stream (AS1) and the second audio stream (AS2) at different volumes, in particular the first audio stream (AS1) at a lower volume than the second audio stream (AS2);
**characterized in that**
the third endpoint (EP3) detects the reception of a further request signal (AF) at a further third endpoint (EP3) and, depending on the further request signal (AF), generates a further second audio stream (AS2") and transmits it to the second endpoint (EP2") from which second endpoint (EP2") the further request signal (AF) originated, wherein preferably a given third endpoint (EP3) generates only one second audio stream (AS2, AS2") at a given time and wherein most preferably the further second audio stream (AS2") is generated only when no second audio stream (AS2) is currently being generated; and **in that**
the second audio stream (AS2) and/or the further second audio stream (AS2") is generated by a simultaneous translation of the first audio stream (AS1), preferably by a human translation; wherein, most preferably, a video stream (VS2) of a human translator is output to a user (B2) of the second endpoint (EP2) together with an audio stream (AS2) of the human translation.

10. The method according to claim 9, in which
the third endpoint (EP3) transmits the second audio stream (AS2) only to a second endpoint (EP2) from which the request signal (AF) was received; and in which, preferably, the second endpoint (EP2) selectively cancels the second audio stream (AS2) at the third endpoint (EP3) by means of a termination signal (BE), while the third endpoint (EP3) transmits the second audio stream (AS2) only to a second endpoint (EP2) from which no termination signal (BE) has been received.

11. The method according to claim 9 or 10, in which
a plurality of third endpoints (EP3) each provide different second audio streams (AS2, AS2"), wherein the second endpoint (EP2) selectively requests a specific second audio stream (AS2, AS2") by sending the request signal (AF) to a specific third endpoint (EP3).

12. The method according to any one of claims 9 to 11, in which
the third endpoint (EP3) transmits a second video stream (VS2) to the second endpoint (EP2) in parallel with the second audio stream (AS2) upon receipt of the request signal (AF) from the second endpoint (EP2).

13. The method according to any one of claims 9 to 12, in which
the third endpoint (EP3) displays a number of second endpoints (EP2) from which the request signal (AF) was received and which receive the second audio stream (AS2) at a given time.

14. The method according to any one of claims 9 to 13, in which
the second audio stream (AS2) is generated by a simultaneous translation of another second audio stream, preferably by a human translator.

15. A computer program product (CP) with program information stored or storable on a physical data carrier, in which, when executed on a computer system with at least three endpoints (EP1-EP3) connected or connectable via communication channels, each of which has a transmitting apparatus (SE) and/or a receiving apparatus (SE) for audio streams and/or for video streams,
a) a video conferencing system is designed for bidirectional transmission of video and audio signals according to any one of claims 1 to 8, and/or
b) a method for transmitting information between the at least three endpoints (EP1-EP3) is carried out in accordance with any one of claims 9 to 14.

## Revendications

1. Système de vidéoconférence formé pour la transmission bidirectionnelle de signaux vidéo et audio au moyen de la technologie de diffusion en continu entre au moins trois points terminaux (EP1-EP3) qui présentent respectivement un dispositif d'émission et/ou un dispositif de réception (SE) pour des flux audio (AS1, AS2, AS2") et/ou des flux vidéo (VS1, VS2, VS2"), comprenant :
i) au moins un premier point terminal (EP1) avec au moins un dispositif d'émission (SE) pour des flux audio et de préférence également avec un dispositif d'émission (SE) pour des flux vidéo ;
ii) . au moins un deuxième point terminal (EP2) avec un dispositif de réception (SE) pour des flux audio ;
iii) i. au moins un troisième point terminal (EP3) avec au moins un dispositif d'émission (SE) pour des flux audio et un dispositif de réception (SE) pour des flux audio ;
pour lequel
a) le premier point terminal (EP1) est relié au deuxième point terminal (EP2) et au troisième point terminal (EP3) afin de transmettre un premier flux audio (AS1) au moyen du dispositif d'émission (SE) pour des flux audio vers le deuxième point terminal (EP2) et le troisième point terminal (EP3) et de transmettre de préférence parallèlement au premier flux audio (AS1) également un premier flux vidéo (VS1) au moyen du dispositif d'émission (SE) pour des flux vidéo au moins vers le deuxième point terminal (EP2) ;
b) le deuxième point terminal (EP2) dispose d'un dispositif de requête de préférence une interface utilisateur graphique (UI), et est relié au troisième point terminal (EP3) afin de demander de manière sélective un deuxième flux audio (AS2) au moyen d'un signal de requête (AF) généré ou pouvant être généré par le dispositif de requête (AF) pour le troisième point terminal (EP3) et de le recevoir au moyen du dispositif de réception (SE) du troisième point terminal (EP3), lequel deuxième flux audio (AS2) est dérivé du premier flux audio (AS1) ;
c) le troisième point terminal (EP3) est formé afin de recevoir le premier flux audio (AS1) du premier point terminal (EP1) et le signal de requête (AF) du deuxième point terminal (EP2) et de générer en fonction du signal de requête (AF) le deuxième flux audio (AS2) et de le transmettre au deuxième point terminal (EP2) ;
**caractérisé en ce que**
le troisième point terminal (EP3) est conçu afin de détecter la réception d'un autre signal de requête (AF) pour un autre troisième point terminal (EP3) et de générer en fonction de l'autre signal de requête (AF) un autre deuxième flux audio (AS2") et de le transmettre au deuxième point terminal (EP2") duquel deuxième point terminal (EP2") provenait l'autre signal de requête (AF), dans lequel de préférence, un troisième point terminal (EP3) donné est formé pour la génération seulement d'un deuxième flux audio (AS2, AS2") à un moment donné et dans lequel le plus préférentiellement, l'autre deuxième flux audio (AS2") ne peut être généré que si justement aucun deuxième flux audio (AS2) n'est généré ; et **en ce que** le deuxième flux audio (AS2) et/ou l'autre deuxième flux audio (AS2") est une traduction simultanée du premier flux audio (AS1), de préférence une traduction humaine.

2. Système de vidéoconférence selon la revendication 1, pour lequel
le deuxième point terminal (EP2) est formé afin de recevoir en même temps au moyen du dispositif de réception (SE) le premier flux audio (AS1) et le deuxième flux audio (AS2) et d'émettre en même temps au moyen d'un dispositif de rendu (SP), de préférence d'émettre avec des volumes différents, le plus préférentiellement le premier flux audio (AS1) avec un volume réduit par rapport au deuxième flux audio (AS2).

3. Système de vidéoconférence selon la revendication 1 ou 2, pour lequel
le troisième point terminal (EP3) est formé afin de transmettre le deuxième flux audio (AS2) seulement vers un deuxième point terminal (EP2), par lequel le signal de requête (AF) a été reçu.

4. Système de vidéoconférence selon l'une quelconque des revendications 1 à 3, pour lequel
le deuxième point terminal (EP2) est formé afin d'annuler au moyen du dispositif de requête (UI) de manière sélective le deuxième flux audio (AS2) au moyen d'un signal de fin (BE) généré ou pouvant être généré par le dispositif de requête (UI) pour le troisième point terminal (EP3), et le troisième
point terminal (EP3) est formé afin de transmettre le deuxième flux audio (AS2) seulement vers un deuxième point terminal (EP2), par lequel aucun signal de fin (BE) n'a été reçu.

5. Système de vidéoconférence selon l'une quelconque des revendications 1 à 4, pour lequel
une pluralité de troisièmes points terminaux (EP3) est présente, lesquels fournissent respectivement différents deuxièmes flux audio (AS2, AS"), dans lequel un deuxième flux audio (AS2, AS") déterminé peut être demandé de manière sélective par émission du signal de requête (AF) à un troisième point terminal (EP3) déterminé par le deuxième point terminal (EP2).

6. Système de vidéoconférence selon l'une quelconque des revendications 1 à 5, pour lequel
au moins le deuxième point terminal (EP2) dispose en outre d'un dispositif de réception (SE) pour des flux vidéo et au moins le troisième point terminal (EP3) dispose en outre d'un dispositif d'émission (SE) pour des flux vidéo, lequel dispositif d'émission (SE) est conçu afin de transmettre lors de la réception du signal de requête (AF) par le deuxième point terminal (EP2) parallèlement au deuxième flux audio (AS2) un deuxième flux vidéo (VS2) au deuxième point terminal (EP2).

7. Système de vidéoconférence selon l'une quelconque des revendications 1 à 6, pour lequel
le troisième point terminal (EP3) dispose d'un dispositif d'affichage (DI) qui affiche un nombre de deuxièmes points terminaux (EP2), par lesquels le signal de requête (AF) a été reçu et qui reçoivent le deuxième flux audio (AS2) à un moment donné.

8. Système de vidéoconférence selon l'une quelconque des revendications 1 à 7, pour lequel
le deuxième flux audio (AS2) est une traduction simultanée d'un autre deuxième flux audio, de préférence une traduction humaine ; et/ou le troisième point terminal (EP3) dispose d'un élément de commande (BE2) avec lequel la transmission du deuxième flux audio (AS2) peut être interrompue temporairement.

9. Procédé de transmission d'informations au moyen de la technologie de diffusion en continu par le biais de canaux de communication entre au moins trois points terminaux (EP1-EP3) qui présentent respectivement un dispositif d'émission et/ou un dispositif de réception (SE) pour des flux audio et/ou pour des flux vidéo, pour lequel :
a) un premier point terminal (EP1) est relié au moins temporairement à un deuxième point terminal (EP2) et à un troisième point terminal (EP3) par le biais d'un canal de communication correspondant et transmet un premier flux audio (AS1) au moyen du dispositif d'émission (SE) pour des flux audio vers le deuxième point terminal (EP2) et le troisième point terminal (EP3) alors que le premier point terminal (EP1) transmet de préférence parallèlement au premier flux audio (AS1) également un premier flux vidéo (VS1) au moyen du dispositif d'émission (SE) pour des flux vidéo au moins vers le deuxième point terminal (EP2) ;
b) le deuxième point terminal (EP2) est relié au moins temporairement au troisième point terminal (EP3) par le biais d'un canal de communication correspondant afin de demander de manière sélective un deuxième flux audio (AS2) au moyen d'un signal de requête (AF) pour le troisième point terminal (EP3) et de le recevoir du troisième point terminal (EP3), lequel deuxième flux audio (AS2) est dérivé du premier flux audio (AS1) ;
c) le troisième point terminal (EP3) reçoit le premier flux audio (AS1) du premier point terminal (EP1) et le signal de requête (AF) du deuxième point terminal (EP2) et génère en fonction du signal de requête (AF) le deuxième flux audio (AS2) du premier flux audio (AS1) et le transmet au deuxième point terminal (EP2) ;
d) le deuxième point terminal (EP2) émet au moins le deuxième flux audio (AS2), de préférence reçoit en même temps le premier flux audio (AS1) et le deuxième flux audio (AS2) et émet en même temps, le plus préférentiellement émet le premier flux audio (AS1) et le deuxième flux audio (AS2) avec des volumes différents, en particulier le premier flux audio (AS1) à un volume réduit par rapport au deuxième flux audio (AS2) ;
**caractérisé en ce que**
le troisième point terminal (EP3) détecte la réception d'un autre signal de requête (AF) pour un autre troisième point terminal (EP3) et génère en fonction de l'autre signal de requête (AF) un autre deuxième flux audio (AS2") et le transmet au deuxième point terminal (EP2"), duquel deuxième point terminal (EP2") provenait l'autre signal de requête (AF), dans lequel de préférence un troisième point terminal donné (EP3) ne génère qu'un deuxième flux audio (AS2, AS2") à un moment donné et dans lequel le plus préférentiellement, l'autre deuxième flux audio (AS2") n'est généré que si justement aucun deuxième flux audio (AS2) n'est généré ; et **en ce que**
le deuxième flux audio (AS2) et/ou l'autre deuxième flux audio (AS2") est généré par une traduction simultanée du premier flux audio (AS1), de préférence par une traduction humaine ; dans lequel le plus préférentiellement, un flux vidéo (VS2) d'un traducteur humain est émis conjointement avec un flux audio (AS2) de la traduction humaine pour un utilisateur (B2) du deuxième point terminal (EP2).

10. Procédé selon la revendication 9, pour lequel
le troisième point terminal (EP3) transmet le deuxième flux audio (AS2) seulement vers un deuxième point terminal (EP2), par lequel le signal de requête (AF) a été reçu ; et pour lequel de préférence, le deuxième point terminal (EP2) annule de manière sélective le deuxième flux audio (AS2) au moyen d'un signal de fin (BE) pour le troisième point terminal (EP3) alors que le troisième point terminal (EP3) transmet le deuxième flux audio (AS2) seulement vers un deuxième point terminal (EP2), par lequel aucun signal de fin (BE) n'a été reçu.

11. Procédé selon la revendication 9 ou 10, pour lequel
une pluralité de troisièmes points terminaux (EP3) fournissent respectivement différents deuxièmes flux audio (AS2, AS2"), dans lequel le deuxième point terminal (EP2) demande de manière sélective un deuxième flux audio déterminé (AS2, AS2") par émission du signal de requête (AF) à un troisième point terminal déterminé (EP3).

12. Procédé selon l'une quelconque des revendications 9 à 11, pour lequel
le troisième point terminal (EP3) transmet lors de la réception du signal de requête (AF) par le deuxième point terminal (EP2) parallèlement au deuxième flux audio (AS2) un deuxième flux vidéo (VS2) au deuxième point terminal (EP2).

13. Procédé selon l'une quelconque des revendications 9 à 12, pour lequel
le troisième point terminal (EP3) affiche un nombre de deuxièmes points terminaux (EP2), par lesquels le signal de requête (AF) a été reçu et qui reçoivent le deuxième flux audio (AS2) à un moment donné.

14. Procédé selon l'une quelconque des revendications 9 à 13, pour lequel
le deuxième flux audio (AS2) est généré par une traduction simultanée d'un autre deuxième flux audio, de préférence par une traduction humaine.

15. Produit de programme informatique (CP) avec des informations de programme enregistrées ou pouvant être enregistrées sur un support de données physiques, qui, lorsqu'elles sont réalisées sur un système informatique avec au moins trois points terminaux (EP1-EP3) reliés ou pouvant être reliés par le biais de canaux de communication, présentent respectivement un dispositif d'émission (SE) et/ou un dispositif de réception (SE) pour des flux audio et/ou pour des flux vidéo,
a) un système de vidéoconférence formé pour la transmission bidirectionnelle de signaux vidéo et audio selon l'une quelconque des revendications 1 à 8 et/ou
b) un procédé de transmission d'informations entre les au moins trois points terminaux (EP1-EP3) exécuté selon l'une quelconque des revendications 9 à 14.
